(19) Europäisches Patentamt / European Patent Office / Office européen des brevets

(11) **EP 3 882 045 B1**

(12) # EUROPEAN PATENT SPECIFICATION


(45) Date of publication and mention of the grant of the patent: **26.03.2025 Bulletin 2025/13**

(21) Application number: **19883943.3**

(22) Date of filing: **01.11.2019**

(51) International Patent Classification (IPC):
***B60C 1/00*** *(2006.01)* ***C08L 7/00*** *(2006.01)*
***C08L 9/06*** *(2006.01)* ***C08K 3/013*** *(2018.01)*
***C08L 9/00*** *(2006.01)* *C08K 3/36* *(2006.01)*
*C08L 15/00* *(2006.01)*

(52) Cooperative Patent Classification (CPC):
(C-Sets available)
**B60C 1/0016; C08C 19/22; C08C 19/25; C08C 19/44; C08F 136/06;** B60C 2011/0025; B60C 2011/145; B60C 2011/147; Y02T 10/86
(Cont.)

(86) International application number: **PCT/JP2019/042981**

(87) International publication number: **WO 2020/100627 (22.05.2020 Gazette 2020/21)**


(54) **RUBBER COMPOSITION, VULCANIZED RUBBER, AND TIRE**

KAUTSCHUKZUSAMMENSETZUNG, VULKANISIERTER KAUTSCHUK UND REIFEN

COMPOSITION DE CAOUTCHOUC, CAOUTCHOUC VULCANISÉ ET PNEU


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.11.2018 JP 2018215881**

(43) Date of publication of application: **22.09.2021 Bulletin 2021/38**



(73) Proprietor: **BRIDGESTONE CORPORATION**
**Chuo-ku**
**Tokyo 104-8340 (JP)**

(72) Inventor: **KISHIMOTO, Shoko**
**Tokyo 104-8340 (JP)**

(74) Representative: **Marks & Clerk LLP**
**15 Fetter Lane**
**London EC4A 1BW (GB)**



(56) References cited:
**EP-A1- 2 995 644**
**EP-A1- 3 305 834**
**EP-A1- 3 725 836**
**EP-A1- 3 725 837**
**WO-A1-2017/126629**
**JP-A- 2009 263 587**
**JP-A- 2010 168 469**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



EP 3 882 045 B1

(52) Cooperative Patent Classification (CPC): (Cont.)

C-Sets
**C08F 136/06, C08F 4/545;**
**C08L 7/00, C08L 15/00, C08L 15/00, C08L 9/00, C08L 57/02, C08K 3/36, C08K 3/04, C08K 5/548, C08K 5/09, C08K 3/22, C08K 3/06, C08K 5/47, C08K 5/18, C08K 5/3477;**
**C08L 7/00, C08L 15/00, C08L 15/00, C08L 9/00, C08L 57/02, C08L 29/04, C08L 23/06, C08K 3/36, C08K 3/04, C08K 5/548, C08K 5/09, C08K 3/22, C08K 3/06, C08K 5/47, C08K 5/18, C08K 5/3477;**
**C08L 7/00, C08L 15/00, C08L 15/00, C08L 9/00, C08L 57/02, C08L 33/00, C08K 3/36, C08K 3/04, C08K 5/548, C08K 5/09, C08K 3/22, C08K 3/06, C08K 5/47, C08K 5/18, C08K 5/3477;**
**C08L 7/00, C08L 15/00, C08L 15/00, C08L 91/00, C08L 57/02, C08L 29/04, C08L 23/06, C08K 3/36, C08K 3/04, C08K 5/548, C08K 5/09, C08K 3/22, C08K 3/06, C08K 5/47, C08K 5/18, C08K 5/3477;**
**C08L 7/00, C08L 15/00, C08L 15/00, C08L 91/00, C08L 57/02, C08L 33/00, C08K 3/36, C08K 3/04, C08K 5/548, C08K 5/09, C08K 3/22, C08K 3/06, C08K 5/47, C08K 5/18, C08K 5/3477;**
**C08L 7/00, C08L 15/00, C08L 15/00, C08L 91/00, C08L 57/02, C08L 33/00, C08L 29/04, C08L 23/06, C08K 3/36, C08K 3/04, C08K 5/548, C08K 5/09, C08K 3/22, C08K 3/06, C08K 5/47, C08K 5/18, C08K 5/3477;**
C08F 236/06, C08F 212/08

## Description

Field of the Invention

The present invention relates to a rubber composition, vulcanized rubber, and a tire.

Background of the Invention

When tires are made to run on an ice snow road, the tires slip by a water film formed between the road surface and the tires, and the brake performance is reduced. Thus, studless tires are required to have improved on-ice performance such as grippability and ease of control of the vehicle even on ice snow roads.

For example, PLT 1 discloses a rubber composition, with a purpose of providing a rubber composition that is capable of greatly improving the on-ice performance of tires, wherein the rubber composition contains at least three diene-based polymers that form a plurality of mutually incompatible polymer phases, and silica, the amount of each of the at least three diene-based polymers to be compounded is 10% by mass or more relative to the total amount of the diene-based polymers, the amount to be compounded of a diene-based polymer (A), having the lowest glass transition temperature (Tg) among the diene-based polymers is 85% by mass or more relative to the amount to be compounded of the diene-based polymer, which is to be blended in the highest amount among the diene-based polymers other than the diene-based polymer (A), among the diene-bases polymers of which amount to be compounded is 10% by mass or more relative to the total amount of the diene-based polymers, a diene-based polymer (B), which has a glass transition temperature (Tg) lower than that of a diene-based polymer (C) having the highest glass transition temperature (Tg) and is other than the diene-based polymer (A), is modified by a silicon atom-containing compound, the diene-based polymer (B) is a copolymer of a conjugated diene compound and styrene, satisfying a relation of the formula (i) (St + Vi/2 $\leq$ 33, wherein St represents the content (% by mass) of bonded styrene in the diene-based polymer (B), and Vi represents the vinyl bond content (% by mass) in the conjugated diene compound portion of the diene-based polymer (B), and the amount of the silica to be compounded is 25 parts by mass or more relative to a total of 100 parts by mass of the diene-based polymers.

Citation List

Patent Literature

PTL 1: WO2017/126629

Summary of the invention

Technical Problem

In order to improve the performance on ice of tires, softening the tires can improve their grip force, but the steering stability may decrease. The fracture property of tires is also likely to decrease. With the approach described in PTL 1, however, the hysteresis loss (tan$\delta$) of the tires becomes insufficient at low temperatures (e.g., -20°C), and the performance on ice, steering stability, fuel consumption efficiency, and fracture resistance require improvement.

It is an object of the present invention is to provide a tire excellent in performance on ice, steering stability, fuel consumption efficiency, and fracture resistance, and a vulcanized rubber and a rubber composition from which the tire can be obtained.

Solution to Problem

<1> A rubber composition comprising:

a rubber component comprising a natural rubber, a polybutadiene rubber, and a styrene-butadiene copolymer rubber, and
more than 60 parts by mass of a filler relative to 100 parts by mass of the rubber component, and at least one selected from the group consisting of a liquid polymer and an acrylic resin, wherein
the mass n of the natural rubber in the rubber component is 40% by mass or more,
the mass n, the mass b of the polybutadiene rubber, and the mass s of the styrene-butadiene copolymer rubber satisfy the relation: s $\leq$ b $\leq$ n, provided that when n = b, s < b, the ratio of the mass b to the mass s (b/s) is from 1.0 to

2.0, the ratio of the vinyl bond content vi (%) of the rubber component to the content a of the rubber component [vi/a] is 8 or more, and
as vulcanized rubber properties, the elastic modulus at -20°C is from 3.5 to 7.8 MPa, and tanδ at -20°C is from 0.250 to 0.350.

<2> The rubber composition according to <1>, wherein the filler comprises silica.
<3> The rubber composition according to <2>, wherein the silica has a cetyltrimethylammonium bromide specific surface area of 160 $m^2/g$ or more.
<4> The rubber composition according to <2> or <3>, wherein the polybutadiene rubber and the styrene-butadiene copolymer rubber are each silane-modified.
<5> The rubber composition according to any one of <1> to <4>, wherein the polybutadiene rubber is a high cis-polybutadiene rubber having a cis-1,4-bond content in a 1,3-butadiene unit of 90% or more.
<6> The rubber composition according to any one of <1> to <5>, further comprising a void introducing agent.
<7> The rubber composition according to <6>, wherein the void introducing agent is at least one selected from the group consisting of a foaming agent, a metal sulfate, thermally expandable microcapsules, and porous cellulose particles.
<8> A vulcanized rubber prepared by vulcanizing the rubber composition according to any one of <1> to <7>.
<9> The vulcanized rubber according to <8> having foam pores.
<10> A tire obtained by using the vulcanized rubber according to <8> or <9>.

Advantageous Effects of Invention

The present invention can provide a tire excellent in performance on ice, steering stability, fuel consumption efficiency, and fracture resistance, and a vulcanized rubber and a rubber composition from which the tire can be obtained.

Brief Description of the Drawings

Fig. 1 is a schematic cross-sectional (partial enlarged) view in the radial direction of a particle of silica; and
Fig. 2 is a graph schematically showing mercury intrusion/extrusion curves of silica in a measurement based on mercury porosimetry using a mercury porosimeter. The vertical axis represents differential mercury intrusion volume (-dV/d(log d)) in mercury intrusion curve C and differential mercury extrusion volume (-dV/d(log d)) in mercury extrusion curve D; V represents mercury intrusion volume (cc) in mercury intrusion curve C, and mercury extrusion volume (cc) in mercury extrusion curve D; d represents the diameter (nm) of an opening of a pore of silica, which is on the horizontal axis.

Detailed Description of the Invention

The present invention is illustrated and described in detail based on embodiments thereof hereinunder.
In the following description, the wording "A to B, or from A to B" indicating the numerical range represents a numerical range including the end points A and B, that is "A or more and B or less" (when A < B) or "A or less and B or more" (when B < A).
Parts by mass and mass % are synonymous with parts by weight and % by weight, respectively.

<Rubber composition>

A rubber composition of the present invention comprises a rubber component comprising a natural rubber, a polybutadiene rubber, and a styrene-butadiene copolymer rubber, and more than 60 parts by mass of a filler relative to 100 parts by mass of the rubber component. The mass n of the natural rubber in the rubber component is 40% by mass or more, the mass n, the mass b of the polybutadiene rubber, and the mass s of the styrene-butadiene copolymer rubber satisfy the relation: $s \leq b \leq n$, provided that when $n = b$, $s < b$, and as vulcanized rubber properties, the elastic modulus at -20°C is from 3.5 to 7.8 MPa, and tanδ at -20°C is from 0.250 to 0.350.
Since the rubber composition is constituted as described above, a tire to be obtained from the rubber composition of the present invention is excellent in performance on ice, steering stability, fuel consumption efficiency, and fracture resistance.
The reason for this is not clearly understood, but it is speculated to be due to the following reason.

The styrene-butadiene copolymer rubber (SBR) and the polybutadiene rubber (BR) are likely to be compatible with each other due to their structures derived from butadiene, and the SBR and BR tend to separate from the natural rubber (NR). Accordingly, it is conceivable that the rubber component of the present invention is likely to undergo phase separation into a phase containing the NR (the phase is referred to as the NR phase) and a phase containing the SBR and BR (the phase is referred to as the SB phase).

The SB phase contains the BR, which is less elastic than SBR, and the SBR, which is more elastic than the BR, and the amount of the SBR is not larger than that of the BR ($s \leq b$). It is conceivable that this structure reduces the elastic modulus of a tire at low temperatures (-20°C) and makes the tire more deformable to thereby enable the hysteresis loss at low temperatures to increase and also facilitate the effectiveness of the brake.

Since the content of the NR in the rubber component is 40% or more and is not less than that of the BR ($b \leq n$), it is conceivable that the elastic modulus of the tire at low temperatures is reduced and the tire becomes more deformable to thereby enable the hysteresis loss at low temperatures to increase and facilitate the effectiveness of the brake.

Further, when the filler is contained in an amount of more than 60 parts by mass relative to 100 parts by mass of the rubber component, the tire is excellent in fracture resistance. When the vulcanized rubber prepared by vulcanizing the rubber composition of the present invention has, as vulcanized rubber properties, an elastic modulus at -20°C of 3.5 to 7.8 MPa and $\tan\delta$ at -20°C of 0.250 to 0.350, a tire to be obtained from the rubber composition of the present invention is excellent in steering stability and fuel consumption efficiency.

The present invention is described in detail hereinunder.

[Rubber component]

The rubber composition of the present invention contains a rubber component containing a natural rubber (NR), a polybutadiene rubber (BR), and a styrene-butadiene copolymer rubber (SBR).

As described above, the SBR and BR are likely to be compatible with each other due to their structures derived from butadiene, and the SBR and BR are likely to separate from the NR. Thus, the rubber component is likely to undergo phase separation into a phase containing the NR (NR phase) and a phase containing the SBR and BR (SB phase). The SBR has a rigid structure derived from styrene, and thus, the SB phase containing the SBR is harder than the NR phase. The rubber component has a soft-hard phase structure composed of the NR phase and the SB phase. The rubber component contained in the rubber composition of the present invention has such a phase structure, and thus, it is conceivable that a tire obtained from the rubber composition of the present invention will have a lower elastic modulus and a higher hysteresis loss at low temperatures.

Although the rubber component may be unmodified or modified, from the viewpoint of allowing the SB phase to contain a larger amount of the filler (more specifically, silica), either one or both of the polybutadiene rubber and the styrene-butadiene copolymer rubber, which are the rubber component constituting the SB phase, is/are preferably modified by a modifying functional group having an affinity for the filler.

[Modifying functional group]

A modifying functional group is not specifically defined provided that the functional group has an affinity for the filler (more specifically, silica), and preferably contains at least one atom selected from the group consisting of a nitrogen atom, a silica atom, an oxygen atom, and a tin atom.

Examples thereof include modifying functional groups containing a nitrogen atom, modifying functional groups containing a silicon atom, modifying functional groups containing an oxygen atom, and modifying functional groups containing a tin atom. One alone or two or more of these may be used here either singly or as combined.

Of these, modifying functional groups containing a nitrogen atom, modifying functional group containing a silicon atom, and modifying functional group containing an oxygen atom are preferred in respect of strongly interacting with fillers such as silica and carbon black.

A method for introducing a modifying functional group into the rubber component is not specifically defined and may be appropriately selected depending on the purpose. Examples thereof include a method including use of a functional group-containing polymerization initiator, a method including copolymerizing a functional group-containing monomer with another compound, and a method including allowing a modifying agent to react on polymer terminals of the rubber component. One alone or two or more of these methods may be carried out here either singly or as combined.

- Modifying functional group containing a nitrogen atom -

The modifying functional group containing a nitrogen atom is not specifically defined and may be appropriately selected depending on the purpose. Examples thereof include substituted amino groups represented by the following general formula (I) and cyclic amino groups represented by the following general formula (II):

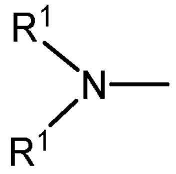

(I)

wherein $R^1$ is an alkyl group, a cycloalkyl group, or an aralkyl group having from 1 to 12 carbon atoms. Here, the alkyl group is preferably a methyl group, an ethyl group, a butyl group, an octyl group, or an isobutyl group, the cycloalkyl group is preferably a cyclohexyl group, and the aralkyl group is preferably a 3-phenyl-1-propyl group. Each $R^1$ may be the same or different.

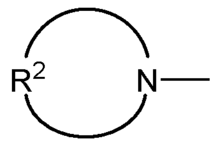

(II)

wherein the $R^2$ group is an alkylene group, a substituted alkylene group, an oxy-alkylene group, or a N-alkylamino-alkylene group having from 3 to 16 methylene groups. Here, the substituted alkylene group includes monosubstituted to octasubstituted alkylene groups, and examples of substituents include a linear or branched chain alkyl group, a cycloalkyl group, a bicycloalkyl group, an aryl group, or an aralkyl group, having from 1 to 12 carbon atoms. Here, the alkylene group is preferably a trimethylene group, a tetramethylene group, a hexamethylene group, and a dodecamethylene group, the substituted alkylene group is preferably a hexadecamethylene group, the oxyalkylene group is preferably an oxydiethylene group, and the N-alkylamino-alkylene group is preferably a N-alkylazadiethylene group.

Examples of the cyclic amino group represented by the general formula (II) are not specifically defined and may be appropriately selected depending on the purpose. Examples thereof include groups in which a hydrogen atom bonded to the nitrogen atom is removed from 2-(2-ethylhexyl)pyrrolidine, 3-(2-propyl)pyrrolidine, 3,5-bis(2-ethylhexyl)piperidine, 4-phenylpiperidine, 7-decyl-1-azacyclotridecane, 3,3-dimethyl-1-azacyclotetradecane, 4-dodecyl-1-azacyclooctane, 4-(2-phenylbutyl)-1-azacyclooctane, 3-ethyl-5-cyclohexyl-1-azacycloheptane, 4-hexyl-1-azacycloheptane, 9-isoamyl-1-azacycloheptadecane, 2-methyl-1-azacycloheptadec-9-en, 3-isobutyl-1-azacyclododecane, 2-methyl-7-t-butyl-1-azacyclododecane, 5-nonyl-1-azacyclododecane, 8-(4'-methylphenyl)-5-pentyl-3-azabicyclo[5.4.0]undecane, 1-butyl-6-azabicyclo[3.2.1]octane, 8-ethyl-3-azabicyclo[3.2.1]octane, 1-propyl-3-azabicyclo[3.2.2]nonane, 3-(t-butyl)-7-azabicyclo[4.3.0]nonane, 1,5,5-trimethyl-3-azabicyclo[4.4.0]decane or the like. One alone or two or more of these may be used here either singly or as combined.

- Modifying functional group containing a silicon atom -

The modifying functional group containing a silicon atom is not specifically defined and may be appropriately selected depending on the purpose. Examples thereof include modifying functional groups having a silicon-carbon bond that are formed by using a coupling agent represented by the following general formula (III).

Such modifying functional groups are preferred in that allowing the rubber component constituting the SB phase to chemically bond with silicon via a silicon-carbon bond can increase the affinity between the SB phase and the filler to thereby allow the SB phase to contain a larger amount of the filler.

Silicon generally has low ability of reinforcing the rubber composition and the like due to its low affinity for a rubber component when merely mixed into a rubber composition. However, when the rubber component constituting the SB phase is allowed to chemically bond with silicon via a silicon-carbon bond, the affinity between the rubber component constituting the SB phase and the filler can be enhanced to thereby further increase the hysteresis loss of the tire.

$$(R^3)_aZ(R^4)_b \qquad \text{(III)}$$

wherein Z is silicon, $R^3$'s are each independently selected from the group consisting of an alkyl group having from 1 to 20 carbon atoms, a cycloalkyl group having from 3 to 20 carbon atoms, an aryl group having from 6 to 20 carbon atoms, and an aralkyl group having from 7 to 20 carbon atoms, $R^4$'s are each independently chlorine or bromine, a is from 0 to 3, b is from 1 to 4, and a + b = 4. Here, the alkyl group is preferably a methyl group, an ethyl group, a n-butyl group, a n-octyl group, and a 2-ethylhexyl, the cycloalkyl group is preferably a cyclohexyl group, the aryl group is preferably a phenyl group, and the aralkyl group is preferably a neophyl group. Each $R^3$ may be the same or different. Each $R^4$ may be the same or different.

In the case where an increase in the interaction between the modified rubber and silica is intended, there may be mentioned modifying agents having at least one of compounds represented by the following general formula (III-1) and

compounds represented by the following general formula (III-2).

$$R^1_a\text{—Si—}(OR^2)_{4-a} \quad \text{(III-1)}$$

In the general formula (III-1), $R^1$ and $R^2$ each independently represent a monovalent aliphatic hydrocarbon group having from 1 to 20 carbon atoms or a monovalent aromatic hydrocarbon group having from 6 to 18 carbon atoms, a is an integer of from 0 to 2, when plural $OR^2$'s are present, the plural $OR^2$'s may be the same or different, and an active proton is not included in the molecule.

Here, specific examples of the compounds represented by the general formula (III-1) (alkoxysilane compounds) include tetramethoxysilane, tetraethoxysilane, tetra-n-propoxysilane, tetraisopropoxysilane, tetra-n-butoxysilane, tetraisobutoxysilane, tetra-sec-butoxysilane, tetra-tert-butoxysilane, methyltrimethoxysilane, methyltriethoxysilane, methyltripropoxysilane, methyltriisopropoxysilane, ethyltrimethoxysilane, ethyltriethoxysilane, ethyltripropoxysilane, ethyltriisopropoxysilane, propyltrimethoxysilane, propyltriethoxysilane, propyltripropoxysilane, propyltriisopropoxysilane, butyltrimethoxysilane, butyltriethoxysilane, phenyltrimethoxysilane, phenyltriethoxysilane, dimethoxydimethylsilane, methylphenyldimethoxysilane, dimethyldiethoxysilane, vinyltrimethoxysilane, vinyltriethoxysilane, and divinyldiethoxysilane. Of these, tetraethoxysilane, methyltriethoxysilane and dimethyldiethoxysilane are preferred. One alone or two or more of such compounds may be used here either singly or as combined.

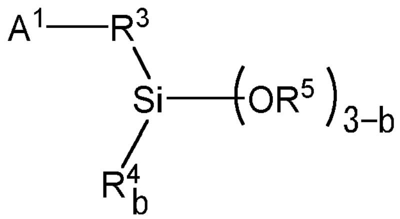

(III-2)

In general formula (III-2), $A^1$ is a monovalent group having at least one functional group selected from the group consisting of epoxy, glycidyloxy, isocyanate, imine, carboxylate, carboxylic acid anhydride, cyclic tertiary amine, acyclic tertiary amine, pyridine, silazane, and disulfide, $R^3$ is a single bond or a divalent hydrocarbon group, $R^4$ and $R^5$ are each independently a monovalent aliphatic hydrocarbon group having from 1 to 20 carbon atoms or a monovalent aromatic hydrocarbon group having from 6 to 18 carbon atoms, b is an integer of from 0 to 2, when plural $OR^5$'s are present, the plural $OR^5$'s may be the same or different, and an active proton is not included in the molecule.

Specific examples of the compounds represented by the general formula (III-2) include epoxy group-containing alkoxysilane compounds, such as 2-glycidyloxyethyltrimethoxysilane, 2-glycidyloxyethyltriethoxysilane, (2-glycidyloxyethyl)methyldimethoxysilane, 3-glycidyloxypropyltrimethoxysilane, 3-glycidyloxypropyltriethoxysilane, (3-glycidyloxypropyl)methyldimethoxysilane, 2-(3,4-epoxycyclohexyl)ethyltrimethoxysilane, 2-(3,4-epoxycyclohexyl)ethyltriethoxysilane, and 2-(3,4-epoxycyclohexyl)ethyl(methyl)dimethoxysilane. Of these, 3-glycidyloxypropyltrimethoxysilane and 2-(3,4-epoxycyclohexyl)ethyltrimethoxysilane are preferably used.

Examples of a coupling agent containing silicon are not specifically defined and may be appropriately selected depending on the purpose. Examples thereof include hydrocarbyloxysilane compounds, $SiCl_4$ (silicon tetrachloride), (Ra)$SiCl_3$, $(Ra)_2SiCl_2$, and $(Ra)_3SiCl$. Ra's each independently represent an alkyl group having from 1 to 20 carbon atoms, a cycloalkyl group having from 3 to 20 carbon atoms, an aryl group having from 6 to 20 carbon atoms, or an aralkyl group having from 7 to 20 carbon atoms.

Of these, hydrocarbyloxysilane compounds are preferred from the viewpoint of having a high affinity for silica.

(Hydrocarbyloxysilane Compound)

Hydrocarbyloxysilane compounds are not specifically defined and may be appropriately selected depending on the purpose. Examples thereof include hydrocarbyloxysilane compounds represented by the following general formula (IV):

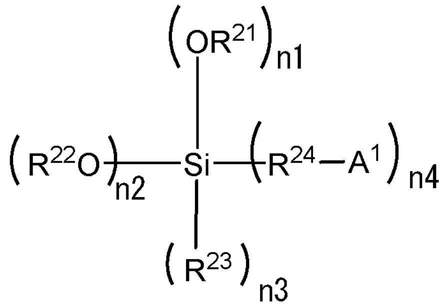

(IV)

wherein n1 + n2 + n3 + n4 = 4, provided that n2 is an integer from 1 to 4 and n1, n3, and n4 each are an integer of from 0 to 3, and $A^1$ represents at least one functional group selected from a saturated cyclic tertiary amine compound residue, an unsaturated cyclic tertiary amine compound residue, a ketimine residue, a nitrile group, a (thio)isocyanate group (representing an isocyanate group or a thioisocyanate group: the same shall apply hereinafter), a (thio)epoxy group, a trihydrocarbyl isocyanurate group, a dihydrocarbyl carbonate group, a nitrile group, a pyridine group, a (thio)ketone group, a (thio)aldehyde group, an amide group, a (thio)carboxylate group, a (thio)carboxylate metal salt group, a carboxylic acid anhydride residue, a carboxylic acid halide residue, and a hydrolysable group-having, primary or secondary amino group or mercapto group. When n4 is 2 or more, then $A^1$'s may be the same or different, $A^1$ may bond to Si to be a divalent group that forms a cyclic structure. $R^{21}$ represents a monovalent aliphatic or alicyclic hydrocarbon group, having from 1 to 20 carbon atoms, or a monovalent aromatic hydrocarbon group having from 6 to 18 carbon atoms. When n1 is 2 or more, then $R^{21}$'s may be the same or different. $R^{23}$ represents a monovalent aliphatic or alicyclic hydrocarbon group, having from 1 to 20 carbon atoms, a monovalent aromatic hydrocarbon group having from 6 to 18 carbon atoms, or a halogen atom (fluorine, chlorine, bromine, iodine). When n3 is 2 or more, then $R^{23}$'s may be the same or different. $R^{22}$ represents a monovalent aliphatic or alicyclic hydrocarbon group, having from 1 to 20 carbon atoms or a monovalent aromatic hydrocarbon group having from 6 to 18 carbon atoms, optionally having a nitrogen atom and/or a silicon atom. When n2 is 2 or more, then $R^{22}$'s may be the same or different, or may bond to each other to form a ring. $R^{24}$ represents a divalent aliphatic or alicyclic hydrocarbon group, having from 1 to 20 carbon atoms, or a divalent aromatic hydrocarbon group having from 6 to 18 carbon atoms. When n4 is 2 or more, then $R^{24}$'s may be the same or different. The hydrolysable group in the hydrolysable group-having, primary or secondary amino group or the hydrolysable group-having mercapto group is preferably a trimethylsilyl group or a tert-butyldimethylsilyl group, more preferably a trimethylsilyl group. In the present specification, "monovalent aliphatic or alicyclic hydrocarbon group, having from 1 to 20 carbon atoms" means "monovalent aliphatic hydrocarbon group having from 1 to 20 carbon atoms, or monovalent alicyclic hydrocarbon group having from 3 to 20 carbon atoms". The same shall apply to the divalent hydrocarbon group.

More preferably, the hydrocarbyloxysilane compound represented by the general formula (IV) is a hydrocarbyloxysilane compound represented by the following general formula (V):

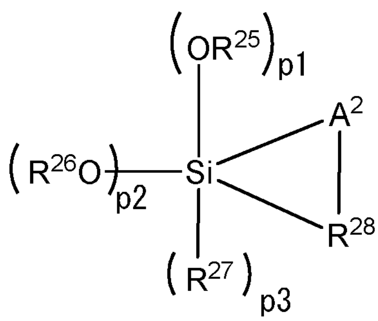

(V)

In the formula, p1 + p2 + p3 = 2 (wherein p2 is an integer of from 1 to 2, and p1 and p3 each are an integer of from 0 to 1); $A^2$ represents NRa (where Ra represents a monovalent hydrocarbon group, a hydrolysable group or a nitrogen-containing organic group; and the hydrolysable group is preferably a trimethylsilyl group or a tert-butyldimethylsilyl group, more preferably a trimethylsilyl group), or a sulfur; $R^{25}$ represents a monovalent aliphatic or alicyclic hydrocarbon group, having from 1 to 20 carbon atoms, or a monovalent aromatic hydrocarbon group having from 6 to 18 carbon atoms; $R^{27}$ represents a monovalent aliphatic or alicyclic hydrocarbon group, having from 1 to 20 carbon atoms, a monovalent aromatic hydrocarbon group having from 6 to 18 carbon atoms, or a halogen atom (fluorine, chlorine, bromine, iodine); $R^{26}$ represents a monovalent aliphatic or alicyclic hydrocarbon group, having from 1 to 20 carbon atoms, a monovalent aromatic hydrocarbon group having from 6 to 18 carbon atoms or a nitrogen-containing organic group, optionally having a nitrogen atom and/or a silicon atom. When p2 is 2, then $R^{26}$'s may be the same or different, or may bond to each other to

form a ring. $R^{28}$ represents a divalent aliphatic or alicyclic hydrocarbon group, having from 1 to 20 carbon atoms, or a divalent aromatic hydrocarbon group having from 6 to 18 carbon atoms.

Further, the hydrocarbyloxysilane compound represented by the general formula (IV) is more preferably a hydrocarbyloxysilane compound represented by the following general formula (VI) or (VII):

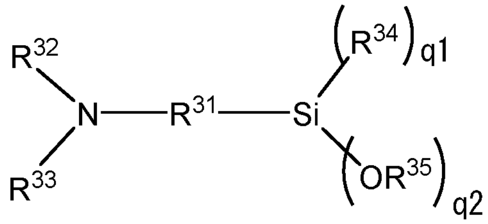

(VI)

In the formula, q1 + q2 = 3 (where q1 is an integer of from 0 to 2, and q2 is an integer of from 1 to 3); $R^{31}$ represents a divalent aliphatic or alicyclic hydrocarbon group, having from 1 to 20 carbon atoms, or a divalent aromatic hydrocarbon group having from 6 to 18 carbon atoms; $R^{32}$ and $R^{33}$ each independently represent a hydrolysable group, a monovalent aliphatic or alicyclic hydrocarbon group, having from 1 to 20 carbon atoms, or a monovalent aromatic hydrocarbon group having from 6 to 18 carbon atoms; $R^{34}$ represents a monovalent aliphatic or alicyclic hydrocarbon group, having from 1 to 20 carbon atoms, or a monovalent aromatic hydrocarbon group having from 6 to 18 carbon atoms. When q1 is 2, then $R^{34}$'s may be the same or different. $R^{35}$ represents a monovalent aliphatic or alicyclic hydrocarbon group, having from 1 to 20 carbon atoms, or a monovalent aromatic hydrocarbon group having from 6 to 18 carbon atoms. When q2 is 2 or more, then $R^{35}$'s may be the same or different.

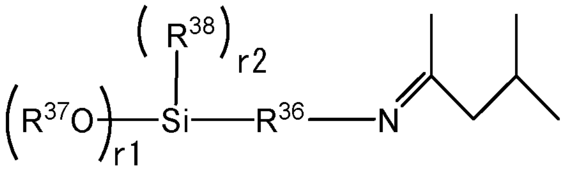

(VII)

In the formula, r1 + r2 = 3 (where r1 is an integer of from 1 to 3, r2 is an integer of from 0 to 2); $R^{36}$ represents a divalent aliphatic or alicyclic hydrocarbon group, having from 1 to 20 carbon atoms, or a divalent aromatic hydrocarbon group having from 6 to 18 carbon atoms; $R^{37}$ represents a dimethylaminomethyl group, a dimethylaminoethyl group, a diethylaminomethyl group, a diethylaminoethyl group, a methylsilyl(methyl)aminomethyl group, a methylsilyl(methyl) aminoethyl group, a methylsilyl(ethyl)aminomethyl group, a methylsilyl(ethyl)aminoethyl group, a dimethylsilylaminomethyl group, a dimethylsilylaminoethyl group, a monovalent aliphatic or alicyclic hydrocarbon group, having from 1 to 20 carbon atoms, or a monovalent aromatic hydrocarbon group having from 6 to 18 carbon atoms. When r1 is 2 or more, then $R^{37}$'s may be the same or different. $R^{38}$ represents a hydrocarbyloxy group having from 1 to 20 carbon atoms, a monovalent aliphatic or alicyclic hydrocarbon group, having from 1 to 20 carbon atoms, or a monovalent aromatic hydrocarbon group having from 6 to 18 carbon atoms. When r2 is 2, then $R^{38}$'s may be the same or different.

The hydrocarbyloxysilane compound represented by the general formula (IV) is preferably a compound having two or more nitrogen atoms represented by the following general formula (VIII) or (IX).

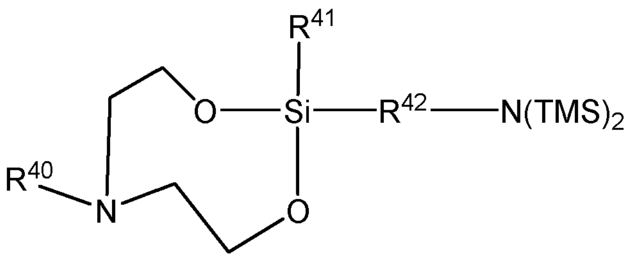

(VIII)

In the formula, TMS represents a trimethylsilyl group; $R^{40}$ represents a trimethylsilyl group, a monovalent aliphatic or alicyclic hydrocarbon group, having from 1 to 20 carbon atoms, or a monovalent aromatic hydrocarbon group having from 6 to 18 carbon atoms; $R^{41}$ represents a hydrocarbyloxy group having from 1 to 20 carbon atoms, a monovalent aliphatic or alicyclic hydrocarbon group, having from 1 to 20 carbon atoms, or a monovalent aromatic hydrocarbon group having from 6 to 18 carbon atoms; $R^{42}$ represents a divalent aliphatic or alicyclic hydrocarbon group, having from 1 to 20 carbon atoms, or a divalent aromatic hydrocarbon group having from 6 to 18 carbon atoms.

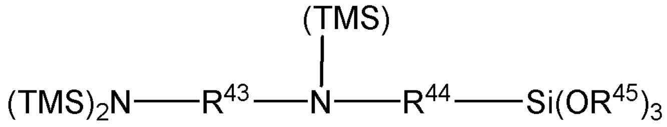

(IX)

In the formula, TMS represents a trimethylsilyl group; $R^{43}$ and $R^{44}$ each independently represent a divalent aliphatic or alicyclic hydrocarbon group, having from 1 to 20 carbon atoms, or a divalent aromatic hydrocarbon group having from 6 to 18 carbon atoms; $R^{45}$ represents a monovalent aliphatic or alicyclic hydrocarbon group, having from 1 to 20 carbon atoms, or a monovalent aromatic hydrocarbon group having from 6 to 18 carbon atoms, and plural $R^{45}$'s may be the same or different.

Also preferably, the hydrocarbyloxysilane compound represented by the general formula (IV) is a hydrocarbyloxysilane compound represented by the following general formula (X):

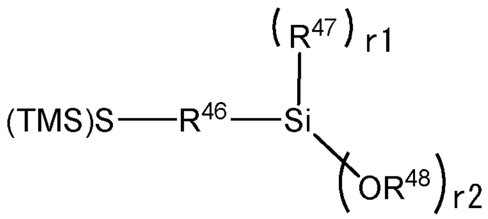

(X)

In the formula, r1 + r2 = 3 (wherein r1 is an integer of from 0 to 2, and r2 is an integer of from 1 to 3); TMS represents a trimethylsilyl group; $R^{46}$ represents a divalent aliphatic or alicyclic hydrocarbon group, having from 1 to 20 carbon atoms, or a divalent aromatic hydrocarbon group having from 6 to 18 carbon atoms; $R^{47}$ and $R^{48}$ each independently represent a monovalent aliphatic or alicyclic hydrocarbon group, having from 1 to 20 carbon atoms, or a monovalent aromatic hydrocarbon group having from 6 to 18 carbon atoms, and plural $R^{47}$'s and $R^{48}$'s may be the same or different.

Further, the hydrocarbyloxysilane compound represented by the general formula (IV) is preferably a compound represented by the following general formula (XI):

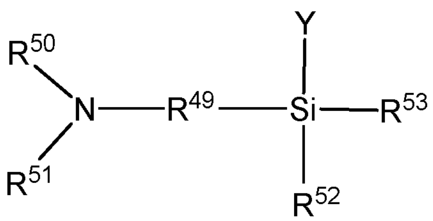

(XI)

In the formula, Y represents a halogen atom; $R^{49}$ represents a divalent aliphatic or alicyclic hydrocarbon group, having from 1 to 20 carbon atoms, or a divalent aromatic hydrocarbon group having from 6 to 18 carbon atoms; $R^{50}$ and $R^{51}$ each independently represent a hydrolysable group, or a monovalent aliphatic or alicyclic hydrocarbon group, having from 1 to 20 carbon atoms, or a monovalent aromatic hydrocarbon group having from 6 to 18 carbon atoms, or $R^{50}$ and $R^{51}$ bond to each other to form a divalent organic group; $R^{52}$ and $R^{53}$ each independently represent a halogen atom, a hydrocarbyloxy group, or a monovalent aliphatic or alicyclic hydrocarbon group, having from 1 to 20 carbon atoms, or a monovalent aromatic hydrocarbon group having from 6 to 18 carbon atoms. Preferably, $R^{50}$ and $R^{51}$ each are a hydrolysable group; and as the hydrolysable group, more preferred is a trimethylsilyl group or a tert-butyldimethylsilyl group, and even more preferred is a trimethylsilyl group.

The hydrocarbyloxysilane compound represented by the above-mentioned general formulae (IV) to (XI) is preferably used in producing the modified rubber component through anionic polymerization.

Also preferably, the hydrocarbyloxysilane compound represented by the above-mentioned general formulae (IV) to (XI) is an alkoxysilane compound.

A modifying agent preferred when a diene-based polymer is modified by anionic polymerization is not specifically defined and may be appropriately selected depending on the purpose. Examples thereof include 3,4-bis(trimethylsilyloxy)-1-vinylbenzene, 3,4-bis(trimethylsilyloxy)benzaldehyde, 3,4-bis(tert-butyldimethylsilyloxy)benzaldehyde, 2-cyanopyridine, 1,3-dimethyl-2-imidazolidinone, and 1-methyl-2-pyrrolidone. One alone or two or more of these may be used here either singly or as combined.

The hydrocarbyloxysilane compound is preferably the amide moiety of a lithium amide compound to be used as a polymerization initiator in anionic polymerization.

The lithium amide compound is not specifically defined and may be appropriately selected depending on the

purpose. Examples thereof include lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium-N-methylpiperadide, lithium ethylpropylamide, lithium ethylbutylamide, lithium ethylbenzylamide, and lithium methylphenethylamide. For example, the amide moiety of lithium hexamethyleneimide to be the modifying agent is hexamethyleneimine; and the amide moiety of lithium pyrrolidide to be the modifying agent is pyrrolidine; and the amide moiety of lithium piperidide to be the modifying agent is piperidine. One alone or two or more of these may be used here either singly or as combined.

- Modifying functional group containing an oxygen atom -

The modifying functional group containing an oxygen atom is not specifically defined and may be appropriately selected depending on the purpose. Examples thereof include alkoxy groups such as a methoxy group, an ethoxy group, a n-propoxy group, an isopropoxy group, a n-butoxy group, a sec-butoxy group, and a t-butoxy group; alkoxyalkyl groups such as a methoxymethyl group, a methoxyethyl group, an ethoxymethyl group, and an ethoxyethyl group; alkoxyaryl groups such as a methoxyphenyl group and an ethoxyphenyl group; alkylene oxide groups such as an epoxy group and a tetrahydrofuranyl group; trialkylsilyloxy groups such as a trimethylsilyloxy group, a triethylsilyloxy group, and a t-butyldimethylsilyloxy group. One alone or two or more of these may be used here either singly or as combined.

From the viewpoint of allowing the SB phase to contain a larger amount of the filler, one of or both the polybutadiene rubber and the styrene-butadiene copolymer rubber is/are preferably silane-modified. Specifically, the polybutadiene rubber and the styrene-butadiene copolymer rubber each are preferably a rubber component modified by the hydrocarbyloxysilane compounds represented by the general formulas (IV) to (XI) described above.

The rubber component may contain a rubber other than the natural rubber, polybutadiene rubber, and styrene-butadiene copolymer rubber (the rubber is referred to as other rubber).

Examples of the other synthetic rubber include a synthetic isoprene rubber, an ethylene-propylene-diene tercopolymer rubber, a chloroprene rubber, a butyl rubber, a halogenated butyl rubber, and an acrylonitrile-butadiene rubber. One alone or two or more of these synthetic diene-based rubbers may be used either singly or as combined.

The mass n of the natural rubber in the rubber component is 40% by mass or more, and the mass n, the mass b of the polybutadiene rubber, and the mass s of the styrene-butadiene copolymer rubber satisfy the relation: $s \leq b \leq n$, provided that when $n = b$, $s < b$.

Note that the unit of the mass n, mass b, and mass s is "% by mass".

The mass n of the natural rubber and the mass b of the polybutadiene rubber may be the same, but the mass b of the polybutadiene rubber and the mass s of the styrene-butadiene copolymer rubber will not take the same value simultaneously.

When the mass n of the natural rubber in the rubber component is less than 40% by mass, a tire to be obtained will be hard at low temperatures and becomes unlikely to deform. For this reason, the tire cannot combine a low elastic modulus at low temperatures with a high hysteresis loss at low temperatures, and thus, cannot sufficiently exert its on-ice brake performance.

Specifically, it is preferred that the mass n of the natural rubber be from 40 to 80% by mass, the mass b of the polybutadiene rubber be from 5 to 40% by mass, and the mass s of the styrene-butadiene copolymer rubber be from 3 to 30% by mass. The total of n, b, and s will not exceed 100% by mass $[(n + b + s) \leq 100]$.

More preferably, the mass n of the natural rubber is from 40 to 70% by mass, the mass b of the polybutadiene rubber is from 10 to 40% by mass, and the mass s of the styrene-butadiene copolymer rubber is from 5 to 25% by mass. Further preferably, the mass n of the natural rubber is from 40 to 65% by mass, the mass b of the polybutadiene rubber is from 20 to 40% by mass, and the mass s of the styrene-butadiene copolymer rubber is from 10 to 25% by mass.

The ratio of the mass b of the polybutadiene rubber to the mass s of the styrene-butadiene copolymer rubber (b/s) is from 1.0 to 2.0. When the amount s of the styrene-butadiene copolymer rubber is equal to or less than the amount b of the polybutadiene rubber, the elastic modulus of the SB phase is prevented from excessively increasing, and the elastic modulus of the tire under a low temperature environment is likely to be reduced.

The amount s of the styrene-butadiene copolymer rubber in the rubber component is preferably from 10 to 30% by mass, more preferably from 10 to 25% by mass, and further preferably from 10 to 22% by mass.

The ratio of the vinyl bond content vi (%) of the rubber component of the rubber component to the content a of the rubber component (parts by mass) [vi/a] is 8 or more.

The unit of the content a of the rubber component is "parts by mass". [vi/a] is calculated by the following expression:

$$[(a_b \times vi_b) + (a_{sb} \times vi_{sb})] / a$$

wherein

$a_b$ is the content of the polybutadiene rubber (parts by mass),
$vi_b$ is the vinyl bond content (%) of the polybutadiene rubber,
$a_{sb}$ is the content of the styrene-butadiene copolymer rubber (parts by mass), and
$vi_{sb}$ is the vinyl bond content (%) of the styrene-butadiene copolymer rubber.

The unit of the content $a_b$ and content $a_{sb}$ is "parts by mass".

When vi/a is 8 or more, it allows the hysteresis loss at low temperatures to increase and facilitate the effectiveness of the brake.

Furthermore, from the viewpoint of more easily achieving the effect of the present invention, it is preferred that the ratio of the mass b of the polybutadiene rubber to the mass s of the styrene-butadiene copolymer rubber (b/s) be from 1.0 to 2.0 and the ratio of the vinyl bond content vi (%) of the rubber component to the content a of the rubber component [vi/a] be 8 or more.

The vinyl bond content vi (%) of the rubber component can be determined by an infrared method (Morello method).

The ratio of the bound styrene content st (%) of the rubber component to the mass s of the styrene-butadiene copolymer rubber (st/s) is preferably 1.0 or less, more preferably 0.7 or less, even more preferably 0.6 or less.

When st/s is 1.0 or less, the rigidity of the styrene-butadiene copolymer rubber is lowered to thereby enable further decrease in the elastic modulus of the tire under a low temperature environment and easily improve the on-ice brake performance.

The bound styrene content st (%) of the rubber component can be determined by an infrared method (Morello method).

From the viewpoint of improving the fracture resistance of a tire, the polybutadiene rubber is preferably a high cis-polybutadiene rubber having a cis-1,4-bond content in a 1,3-butadiene unit of 90% or more.

The high cis-polybutadiene rubber means a polybutadiene rubber having a cis-1,4-bond content in a 1,3-butadiene unit of 90% or more, as measured by FT-IR. The cis-1,4-bond content in a 1,3-butadiene unit of the high cis-polybutadiene rubber is preferably from 92% or more and 99% or less.

A method for producing the high cis-polybutadiene rubber is not particularly limited, and the high cis-polybutadiene rubber may be produced by a known method. An example of the method is a method of polymerizing butadiene using a neodymium-based catalyst.

The high poly cis butadiene rubber is commercially available, and examples thereof include "BR01", "T700", manufactured by JSR Corporation and "UBEPOL BR150L" manufactured by Ube Industries, Ltd.

The high cis-polybutadiene rubber may be or may not be modified. As described above, the high cis-polybutadiene rubber is preferably silane-modified.

<Filler>

The rubber composition of the present invention contains more than 60 parts by mass of a filler relative to 100 parts by mass of the rubber component.

The content of the filler in the rubber composition is preferably 63 parts by mass or more, and more preferably 66 parts by mass or more, and is preferably 85 parts by mass or less, and more preferably 75 parts by mass or less relative to 100 parts by mass of the rubber component.

The filler is not particularly limited. For example, a reinforcing filler which reinforces a rubber composition is used. Examples of the reinforcing filler include white filler such as silica, aluminum hydroxide and calcium carbonate; and carbon black.

Silica may be used alone, or both silica and carbon black may be used as a filler, but the filler preferably contains at least silica.

Furthermore, 50% by mass or more of the total content of silica is preferably contained in a phase (SB phase) containing polybutadiene rubber and styrene-butadiene copolymer rubber.

When the amount of silica contained in the SB phase is less than 50% by mass of the total of silica, the NR phase can be made soft, thereby the elastic modulus of a tire at low temperature can be reduced.

The amount of silica contained in the SB phase is preferably more than 50% by mass, more preferably 60% by mass or more, and further preferably 70% by mass or more.

The amount of the filler including silica contained in the SB phase (or the ratio of distribution of the filler) may be measured by the following method.

The ratio of distribution of the filler in the rubber composition is similar to the ratio of distribution of the filler in vulcanized rubber, and may be measured using vulcanized rubber prepared by vulcanizing the rubber composition as a

sample for measurement.

For example, after cutting a sample in the direction at a 38° angle to the top surface of the sample, the smooth surface of the sample formed by cutting is photographed in the direction perpendicular to the smooth surface with a scanning electron microscope (SEM), e.g., trade name "Ultra 55" made by Carl Zeiss, using focused ion beam at an accelerating voltage of from 1.8 to 2.2 V. The SEM image obtained is subjected to image processing and analyzed to determine the ratio of distribution of the filler. Methods of analysis include several options, and in the present invention, for example, the following method may be used.

In the measurement of a system in which the rubber component is separated into two phases of an NR phase and a SB phase as in the present invention, a possible means therefor is to converting the SEM image obtained into a trinary image of two rubber components and filler portions with a histogram and subject the obtained trinary image to image analysis. In that case, the perimeter of the filler contained in each of the two rubber components is determined, and the ratio of the filler existing in one phase of the rubber components is calculated based on the total amount of the filler in the area measured. When the filler is at the boundary of two rubber components, two points at which the three of the respective rubber components and the filler come into contact are connected to divide the perimeter of the filler. Particles of 20 pixels or less are regarded as noise and not counted. The method of measuring the abundance of the filler, the method of image analysis and the like are not limited to the above description.

(Carbon black)

Carbon black, which is not particularly limited, may be appropriately selected according to the purpose. Carbon black of, e.g., FEF, SRF, HAF, ISAF, and SAF grades, is preferred, and of HAF, ISAF, and SAF grades, is more preferred.

(Silica)

The type of silica is not particularly limited. Standard grade silica and special silica prepared by surface treatment with, e.g., silane coupling agent may be used according to the application.

Silica has a CTAB (cetyltrimethylammonium bromide) specific surface area of preferably 160 $m^2/g$ or more, more preferably more than 160 $m^2/g$, further preferably 170 $m^2g$ or more, and particularly preferably 175 $m^2/g$ or more. Silica has a CTAB specific surface area of preferably 600 $m^2/g$ or less, more preferably 300 $m^2/g$ or less, and particularly preferably 270 $m^2/g$ or less. When the CTAB specific surface area of silica is 160 $m^2/g$ or more, the wear resistance of a tire is excellent. A CTAB specific surface area of silica of 600 $m^2/g$ or less reduces rolling resistance.

Examples of silica, which are not particularly limited, include wet method silica (hydrated silica), dry method silica (anhydrous silica), calcium silicate, and aluminum silicate. Of them, wet method silica is preferred. Such silica may be used alone, or two or more of them may be used in combination.

For the rubber composition of the present invention, silica may be used, in which the CTAB specific surface area ($m^2/g$) (simply referred to as "CTAB" in formula (Y)) and the ink bottle-shaped pore index (IB) satisfy the relationship of the following formula (Y):

$$\mathrm{IB} \leq -0.36 \times \mathrm{CTAB} + 86.8 \quad \text{-------} \quad (\mathrm{Y}).$$

As used herein, the CTAB specific surface area ($m^2/g$) refers to a value measured in accordance with ASTM D3765-92. In this regard, since ASTM D3765-92 is directed to a method of measuring CTAB of carbon black, in the present invention, a cetyltrimethylammonium bromide (hereinafter abbreviated as CE-TRAB) standard solution is separately prepared instead of the standard product, IRB#3 (83.0 $m^2/g$), and a silica OT (sodium di-2-ethylhexyl sulfosuccinate) solution is standardized using the above solution; and assuming the cross-sectional area of a CE-TRAB molecule adsorbed to the surface of silica to be 0.35 n $m^2$, the specific surface area ($m^2/g$) calculated from the amount of adsorption of CE-TRAB is defined as the CTAB value. This is because since carbon black and silica has a different surface, the amount of adsorption of CE-TRAB wil l be different even in the same surface area.

The ink bottle-shaped pore index (IB) means a value determined by the following formula (Z):

$$\mathrm{IB} = \mathrm{M2} - \mathrm{M1} \quad \text{-----------} \quad (\mathrm{Z})$$

wherein, M1 represents, in a measurement of silica having pores with an opening in the range of from 1.2 $\times$ $10^5$ nm to 6 nm in diameter on the outer surface based on mercury porosimetry using a mercury porosimeter, a diameter (nm) of an opening with which the mercury intrusion volume is the maximum when pressure is increased from 1 PSI to 32,000 PSI.

M2 represents a diameter (nm) of an opening with which the mercury extrusion volume is the maximum when pressure is decreased from 32,000 PSI to 1 PSI, in the measurement.

The measurement based on mercury porosimetry using mercury porosimeter is useful because it is easier than the measurement with an electron microscope which has been often used to evaluate the form of pores and offers excellent quantitative determination.

Particles of silica usually have many recessed pores with an opening on the outer surface. Fig. 1 is a schematic view illustrating the shape of such pores in the radial cross-sectional direction of a particle of silica. Pores recessed in the radial cross-sectional direction of a particle have various shapes. Examples thereof include pore A in which diameter Ma of an opening on the outer surface of a particle is substantially the same as pore dimeter (inner diameter) Ra in the particle, i.e., a pore which is cylindrical in the radial cross-sectional direction of a particle, and pore B in which diameter Mb of an opening on the outer surface of a particle is smaller than pore dimeter (inner diameter) Rb in the particle, i.e., a pore which is ink bottle-shaped in the radial cross-sectional direction of a particle. For pore B, which is ink bottle-shaped in the radial cross-sectional direction of a particle, molecular chains of rubber hardly enter the particle from the outer surface, and thus the molecular chain of rubber fails to adsorb silica sufficiently when silica is compounded into rubber components. Therefore, it is preferred that the number of ink bottle-shaped pores B be reduced and the number of pores A which are substantially cylindrical in the radial cross-sectional direction of a particle be increased. This may facilitate efficient entry of molecular chains of the rubber. Providing sufficient reinforcing effects can contribute to improvement in steering stability of a tire without increasing tan $\delta$.

Considering the above, the present invention defines the ink bottle-shaped pore index (IB) for silica to be compounded into rubber components so as to reduce the number of pores B which are ink bottle-shaped in the radial cross-sectional direction of a particle. As described above, when pressure is increased in a measurement based on mercury porosimetry using a mercury porosimeter, mercury easily intrudes into the inside of substantially cylindrical pore A because the opening on the outer surface is wide, while mercury is less likely to intrude into the inside of ink bottle-shaped pore B because the opening on the outer surface is narrow. On the other hand, when pressure is deceased, mercury easily extrudes from the inside to the outside of substantially cylindrical pore A, while mercury hardly extrudes from the inside to the outside of ink bottle-shaped pore B for the same reason.

Thus, as shown in Fig. 2, in the measurement based on mercury porosimetry using a mercury porosimeter, hysteresis is generated in mercury intrusion-extrusion curves C - D. More specifically, in a relatively low pressure, mercury gradually intrudes into substantially cylindrical pores A, while at a certain pressure, mercury suddenly intrudes into pores including ink bottle-shaped pores B into which mercury hardly intrudes, in addition to the substantially cylindrical pores, and thus the intrusion volume is sharply increased, resulting in forming mercury intrusion curve C with differential mercury intrusion volume (-dV/d(log d)) on the vertical axis and diameter d (nm) of an opening of a pore of silica on the horizontal axis. On the other hand, when the pressure is sufficiently increased and then decreased, mercury still does not easily extrude from pores in a relatively high pressure, while mercury which has intruded into pores suddenly extrudes from pores when a certain pressure is reached, and thus the extrusion volume is sharply increased, resulting in forming mercury extrusion curve D with differential mercury extrusion volume (-dV/d(log d)) on the vertical axis and diameter M (nm) of an opening of a pore of silica on the horizontal axis. Mercury which has once intruded into pores is less likely to extrude from pores when pressure is decreased, therefore, an increase in the extrusion volume is observed when pressure is decreased at a point of diameter (M2) larger than diameter (M1) where the intrusion volume is increased when pressure is increased. The difference in the diameters (M2-M1) corresponds to IB in Fig. 2. The tendency of little extrusion of mercury which has intruded into pores is particularly remarkable in ink bottle-shaped pores B. Although mercury intrudes into pores B in increased pressure, little mercury extrudes from pores B in reduced pressure.

Adopting the above method of measurement and using mercury intrusion/extrusion curves C, D reflecting characteristics of pores, difference IB is determined, by the above formula (Z), between M1 (nm) and M2 (nm) . Although this value is apparently a difference in those diameters (length: nm), it is substantially a pore index representing the abundance of ink bottle-shaped pores B in silica. More specifically, the lower the abundance of ink bottle-shaped pores B having a sufficiently narrow opening, the closer the mercury intrusion volume and the mercury extrusion volume. As a result, the difference between M1 and M2 becomes smaller, and thus the value of IB becomes smaller. On the other hand, the higher the abundance of ink bottle-shaped pores B, the more the mercury extrusion volume decreases rather than the mercury intrusion volume. Then, the difference between M1 and M2 becomes larger, and thus the value of IB becomes larger.

As described above, M1 is a diameter (nm) of an opening with which the mercury intrusion volume is the maximum. Specifically, M1 is a diameter (nm) of an opening with which the mercury intrusion volume is the maximum when pressure is increased from 1 PSI to 32,000 PSI in a measurement based on mercury porosimetry using a mercury porosimeter. M2 is a diameter (nm) of an opening with which the mercury extrusion volume is the maximum. Specifically, M2 is a diameter (nm) of an opening with which the mercury extrusion volume is the maximum when pressure is decreased from 32,000 PSI to 1 PSI.

The above IB may also vary according to the above CTAB value, and the higher CTAB, the lower the IB value. Therefore, silica used in the present invention preferably satisfies the above formula (Y) [$IB \leq -0.36 \times CTAB + 86.8$]. In silica in which IB and CTAB satisfy formula (Y), the number of ink bottle-shaped pores B having a narrow opening is efficiently

reduced to increase the abundance of substantially cylindrical pores A, enabling sufficient entry of molecular chain of rubber and adsorption of silica, providing sufficient reinforcing effects and improving steering stability without increasing rolling resistance of a tire.

Silica satisfying formula (Y) has a CTAB specific surface area of preferably 200 $m^2/g$ or more, more preferably more than 200 $m^2/g$, further preferably from 210 to 300 $m^2/g$, still more preferably from 220 to 280 $m^2/g$, and particularly preferably from 230 to 270 $m^2/g$. A CTAB specific surface area of 200 $m^2/g$ or more improves storage modulus of the rubber composition, and further increases steering stability of a tire to which the rubber composition is applied. A CTAB specific surface area of 300 $m^2/g$ or less enables silica to be dispersed well in rubber components, improving processability of the rubber composition.

The rubber composition of the present invention may also contain a silane coupling agent. As such a silane coupling agent, a silane coupling agent usually used in the rubber industry may be used.

[Resin]

The rubber composition of the present invention preferably includes a resin.

Including a resin in the rubber composition of the present invention reduces elastic modulus of the resulting vulcanized rubber and tire at low temperature, allowing the tire which is likely to be hard on ice to follow irregularities on the road surface, thus further increasing brake performance on ice.

Examples of resin include C5 resins, C5/C9 resins, C9 resins, phenol resins, terpene resins, terpene-aromatic compound resins, and acrylic resin. These resins may be used alone, or two or more of them may be used in combination.

C5 resins include aliphatic hydrocarbon resins and alicyclic hydrocarbon resins.

Aliphatic hydrocarbon resins include petroleum resins produced by polymerization of C5 petroleum fraction. Examples of petroleum resins produced by using high purity 1,3-pentadiene as a main raw material include ZEON CORPORATION's trade name "Quintone 100" series (A100, B170, K100, M100, R100, N295, U190, S100, D100, U185, P195N, etc.). Examples of other petroleum resins produced by polymerizing C5 petroleum fraction also include Exxon Mobil Corporation's trade name "Escorez" series (1102, 1202(U), 1304, 1310, 1315, 1395, etc.) and Mitsui Chemicals' trade name "Hirez" series (G-100X, -T-100X, -C-110X, -R-100X, etc.).

Examples of alicyclic hydrocarbon resins include cyclopentadiene petroleum resin produced by using cyclopentadiene extracted from C5 fraction as a raw material and dicyclopentadiene petroleum resin produced by using dicyclopentadiene in C5 fraction as a raw material. Examples of cyclopentadiene petroleum resin produced by using high purity cyclopentadiene as a raw material include ZEON CORPORATION's trade name "Quintone 1000" series (1325, 1345, etc.). Furthermore, examples of dicyclopentadiene petroleum resin include Maruzen Petrochemical's trade name "Marukarez" series (M-890A, M-845A, M-990A, etc.).

C5/C9 resins include C5/C9 synthetic petroleum resins, which are, for example, a solid polymer obtained by polymerizing from C5 to C11 fraction derived from petroleum using Friedel-Crafts catalyst such as $AlCl_3$ and $BF_3$. Specific examples thereof include copolymers containing styrene, vinyl toluene, $\alpha$-methylstyrene, indene, etc. as a main component. C5/C9 resins in which the amount of a component of C9 or more is small are preferred in consideration of the compatibility with diene polymers. In this regard, "the amount of a component of C9 or more is small" means that the amount of a component of C9 or more is less than 50% by mass, more preferably 40% by mass or less based on the total amount of resin. Commercial products may be used as C5/C9 resin, and examples thereof include trade name "Quintone® G100B" (ZEON CORPORATION) and trade name "ECR213" (Exxon Mobil Chemical).

C9 resins include C9 synthetic petroleum resins, which are a solid polymer obtained by polymerizing C9 fraction using Friedel-Crafts catalyst such as $AlCl_3$ and $BF_3$. Examples thereof include copolymers containing indene, methylindene, $\alpha$-methylstyrene, vinyl toluene, etc. as a main component.

Phenols resins such as phenol-formaldehyde resin, resorcin-formaldehyde resin, and cresol-formaldehyde resin are preferred, and phenol-formaldehyde resin is particularly preferred.

Terpene resins refer to resins produced by using naturally derived turpentine oil or orange oil as a main raw material. Examples thereof include Yasuhara Chemical's trade name "YS resin" series (PX-1250, TR-105, etc.), and Hercules' trade name "Piccolyte" series (A115, S115, etc.).

Terpene-aromatic compound resins include, for example, terpene-phenolic resins. Examples thereof include Yasuhara Chemical's trade name "YS POLYSTER" series (U series such as U-130, U-115, and T series such as T-115, T-130, T-145) and Arakawa Chemical Industries' trade name "TAMANOL 901."

Examples of acrylic resin that can be used include polymers of an alkyl acrylate such as methyl acrylate, ethyl acrylate, propyl acrylate, isopropyl acrylate, butyl acrylate, isobutyl acrylate, and hexyl acrylate, an alkyl methacrylate such as methyl methacrylate, ethyl methacrylate, butyl methacrylate, and hexyl methacrylate, and particularly include polymethyl methacrylate, polyethyl methacrylate, or polybutyl methacrylate.

Such acrylic resin may be modified with at least one selected from a hydroxyl group, an epoxy group, a carboxyl group, and an alkoxysilyl group.

The rubber composition has an effect of improving the flexibility of rubber when comprising acrylic resin to thereby enable the performance on ice to be improved. The acrylic resin described above has an interaction with a filler such as silica, and its dispersibility is improved in the rubber composition. Thus, when the rubber composition is used in a tire, the composition is prevented from leaching on the surface of a tire as bloom. As a result, when the rubber composition of the present invention is used in a tire, not only the initial performance on ice but also the performance on ice after a passage of years can be maintained high.

One or two or more acrylic resins may be used.

From the viewpoint of making the NR phase softer to thereby reduce the elastic modulus of a tire at low temperature, one or more resins including an isoprene skeleton selected from the group consisting of C5 resins, C5/C9 resins, terpene resins, and terpene-aromatic compound resins are preferably included in the NR phase. Furthermore, from the viewpoint of making the resin to be easily distributed in the NR phase, a resin having an isoprene main skeleton is preferably used as the resin including an isoprene skeleton. Specific examples thereof include at least one selected from the group consisting of C5 resins, and terpene resins. Of the above resins, C5 resins are preferred.

The content of the resin in the rubber composition, which is not particularly limited, is preferably from 5 to 60 parts by mass, and more preferably from 10 to 50 parts by mass relative to 100 parts by mass of the rubber component.

Furthermore, to achieve both low elastic modulus at low temperature and high hysteresis loss at low temperature, and further improve the performance on ice and wear resistance of a tire when the rubber composition is applied to tread, the ratio of mass rs (parts by mass) of the resin to mass si (parts by mass) of silica (rs/si) is preferably from 0.1 to 1.2.

[Softening agent]

The rubber composition of the present invention may or may not include a softening agent.

Examples of the softening agent include petroleum-based softening agents such as process oil, lubricating oil, naphthene oil, paraffin, fluid paraffin, petroleum asphalt, and petrolatum; fatty oil-based softening agents such as castor oil, linseed oil, rapeseed oil, and palm oil; waxes such as beeswax, carnauba wax, and lanolin; and liquid polymers. These softening agents may be used alone, or two or more of them may be used in combination.

Among these, a liquid polymer is preferably used as the softening agent.

From the viewpoint that the rubber composition has vulcanized rubber properties of an elastic modulus at -20°C of from 3.5 to 7.8 MPa and tanδ at -20°C of from 0.250 to 0.350 to thereby improve the performance on ice of a tire, the liquid polymer has a weight average molecular weight of preferably 6,000 or more, more preferably 7,000 or more, and further preferably 8,000 or more. Likewise, the liquid polymer has a weight average molecular weight of preferably 20,000 or less and more preferably 14,500 or less.

The rubber composition contains at least one selected from the group consisting of a liquid polymer and an acrylic resin. The total amount of the liquid polymer and acrylic resin is preferably 1 part by mass or more relative to 100 parts by mass of the rubber component.

This allows the rubber composition to be likely to have vulcanized rubber properties of an elastic modulus at -20°C of from 3.5 to 7.8 MPa and tanδ at -20°C of from 0.250 to 0.350, the performance on ice of a tire to be improved, and fuel consumption efficiency and fracture property to be likely to be achieved.

Likewise, the total amount of the liquid polymer and acrylic resin is more preferably 5 parts by mass or more and further preferably 7 parts by mass or more relative to 100 parts by mass of the rubber component. Likewise, the total amount of the liquid polymer and acrylic resin is preferably 35 parts by mass or less, more preferably 30 parts by mass or less, and further preferably 25 parts by mass or less relative to 100 parts by mass of the rubber component.

Examples of the liquid polymer include, but are not particularly limited to, diene-based liquid polymers such as liquid polyisoprene, liquid polybutadiene, and liquid styrene-butadiene copolymers, liquid butene, liquid silicone polymers, and silane-based liquid polymers. Among these, liquid polybutadiene is preferably used.

One or two or more liquid polymers may be used.

Liquid polybutadiene, when the vinyl bond content in the conjugated diene compound portion is 20% or more, is more easily localized in the NR phase.

From the viewpoint of allowing liquid polybutadiene to be more easily localized in the NR phase, the vinyl bond content in the conjugated diene compound of the liquid polybutadiene is preferably 30% or more, more preferably 40% or more, more preferably 45% or more, and further preferably 50% or more. From the viewpoint of suppressing an increase in the hardness of the rubber, the vinyl bond content in the conjugated diene compound of the liquid polybutadiene is preferably 70% or less, more preferably 65% or less, and further preferably 59% or less.

[Void introducing agent]

The rubber composition of the present invention preferably contains a void introducing agent.

When the rubber composition contains a void introducing agent, vulcanized rubber has voids on the surface or

inside thereof or both on the surface and inside thereof. Thus, a tire obtained by using the vulcanized rubber has flexibility and becomes likely to be in close contact with an icy road surface. Additionally, water on the road surface is absorbed by the voids on the tire surface, and water is more likely to be removed from the ice snow road surface. Accordingly, on-ice brake performance can be improved.

Examples of the void introducing agent include foaming agents, metal sulfates, thermally expandable microcapsules, and porous cellulose particles. One alone or two or more of these may be used here either singly or in admixture. From the viewpoint of performance on ice, a foaming agent is preferably used.

The content of the void introducing agent in the rubber composition, which is not particularly limited, but from the viewpoint of performance on ice (on-ice brake performance) and steering stability, is preferably from 0.1 to 20 parts by mass and more preferably from 1 to 10 parts by mass relative to 100 parts by mass of the rubber component.

(Foaming agent)

Inclusion of a foaming agent in the rubber composition generates foam in vulcanized rubber in the vulcanization of the rubber composition, and the vulcanized rubber can be formed into foamed rubber. The flexibility of foamed rubber allows the surface of a tire using the vulcanized rubber to be in close contact with the icy road surface. Furthermore, foam creates foam-derived holes (foam pores) on the surface of vulcanized rubber and the surface of a tire, which serve as a water channel for draining water.

Specific examples of foaming agent include azodicarbonamide (ADCA), dinitrosopentamethylenetetramine (DPT), dinitrosopentastyrenetetramine, benzenesulfonylhydrazide derivatives, p,p'-oxybisbenzenesulfonylhydrazide (OBSH), ammonium bicarbonate, sodium bicarbonate and ammonium carbonate which generate carbon dioxide, nitrososulfonylazo compounds which generate nitrogen, N,N'-dimethyl-N,N'-dinitrosophtalamide, toluenesulfonylhydrazide, p-toluenesulfonylsemicarbazide, and p,p'-oxybisbenzenesulfonylsemicarbazide. Of them, azodicarbonamide (ADCA) and dinitrosopentamethylenetetramine (DPT) are preferred in consideration of processability in production. These foaming agents may be used alone, or two or more of them may be used in combination.

The content of the foaming agent in the rubber composition, which is not particularly limited, is preferably from 1 to 10 parts by mass, and more preferably from 2 to 8 parts by mass relative to 100 parts by mass of the rubber component.

In the rubber composition, urea, zinc stearate, zinc benzenesulfinate, zinc oxide, etc., may also be used as foaming auxiliary. These may be used alone, or two or more of them may be used in combination. Using foaming auxiliary in combination facilitates foaming reaction to increase the degree of completion of the reaction, suppressing unnecessary degradation over time.

Vulcanized rubber obtained by vulcanizing the rubber composition containing a foaming agent has a foaming ratio of usually from 1 to 50%, and preferably from 5 to 40%. When a foaming agent is compounded and the foaming ratio is 50% or less, voids on the surface of rubber are not excessively enlarged to provide a sufficient ground contact area. Furthermore, the amount of foam is properly maintained while ensuring the generation of foam which effectively serve as a drain. Therefore, durability is less likely to be lost. In this regard, the foaming ratio of vulcanized rubber means average foaming ratio Vs, which is specifically calculated by the following formula (1).

$$Vs = (\rho_0/\rho_1 - 1) \times 100\ (\%) \qquad (1)$$

In formula (1), $\rho_1$ represents the density (g/cm$^3$) of vulcanized rubber (foamed rubber) and $\rho_0$ represents the density (g/cm$^3$) of the solid phase of the vulcanized rubber (foamed rubber). The mass of vulcanized rubber in ethanol and the mass of the vulcanized rubber in air are measured to calculate the density of the vulcanized rubber and the density of the solid phase of the vulcanized rubber. The foaming ratio may be appropriately changed according to the type, amount, etc. of foaming agent, foaming auxiliary, and the like.

(Metal sulfate)

When the rubber composition contains a metal sulfate, the metal sulfate projects from the surface of a tire obtained by vulcanizing the rubber composition to serve a claw function without a disadvantage of being abrasive. Subsequently, the metal sulfate gradually leaves from the rubber matrix to thereby generate voids, which function as a storage volume and a passage for discharging a water film on the ice surface. Under these conditions, the contact between the tire surface (e.g., tread surface) and the ice is no longer lubricated, and thus the coefficient of friction is improved.

An example of the metal sulfate is magnesium sulfate.

The metal sulfate is preferably micrometer-sized particles. Specifically, the average particle size and the median particle size (both expressed in mass) are preferably from 1 μm to 1 mm, and the median particle size is more preferably from 2 μm to 800 μm.

When the average particle size and the median particle size are 1 μm or more, the intended technical effect (i.e., formation of appropriate microroughness) is likely achieved. When the average particle size and the median particle size are 1 mm or less, particularly in the case where the rubber composition is used as the tread, degradation in aesthetics is suppressed (extremely obvious appearance of particles on the tread surface can be suppressed.), and gripping performance on melt ice is unlikely to be impaired.

For all of these reasons, the median particle size of the metal sulfate is preferably from 2 μm to 500 μm and more preferably from 5 to 200 μm. This particularly preferable particle size range seems to correspond to an optimal compromise between a desired surface roughness, on one hand, and a good contact of the rubber composition with ice, on the other hand.

Further, for the same reasons as those described above, the content of the metal sulfate in the rubber composition is preferably from 5 to 40 parts by mass and more preferably from 10 to 35 parts by mass relative to 100 parts by mass of the rubber component.

For analysis of the particle size and calculation of the median particle size of the microparticles (or the average diameter of the microparticles with an assumption that the microparticles are substantially spherical), for example, various known methods by laser diffraction are applicable (e.g., see the standard ISO-8130-13 or the standard JIS K5600-9-3).

Particle size analysis by mechanical sieving may be simply and preferably used; the operation includes sieving a defined amount of sample (e.g., 200 g) on a vibrating table for 30 min with different sieve diameters (e.g., according to a progressive ratio equal to 1.26, with meshes of 1000, 800, 630, 500, 400, ... 100, 80, and 63 μm); the oversize collected in each sieve is weighed on a precision balance; the % of oversize for each mesh diameter with respect to the total weight of the substance is deduced from the weighed weight; in the end, the median particle size (or median diameter) or average particle size (or average diameter) is calculated in a known manner from the histogram of the particle size distribution.

(Thermally expandable microcapsules)

The thermally expandable microcapsules each have a structure in which a thermally expandable substance is encapsulated in a shell material formed from a thermoplastic resin. The shell material of the thermally expandable microcapsules can be formed from a nitrile-based polymer.

The thermally expandable substance encapsulated in the shell material of the microcapsules has a property of vaporizing or expanding by heat, and an example thereof is at least one type selected from the group consisting of hydrocarbons such as isoalkanes and normal alkanes. Examples of the isoalkanes include isobutane, isopentane, 2-methylpentane, 2-methylhexane, and 2,2,4-trimethylpentane, and examples of normal alkanes include n-butane, n-propane, n-hexane, n-heptane, and n-octane. One alone or a plurality of these hydrocarbons may be used singly or in combination. As a preferred form of the thermally expandable substance, one prepared by dissolving a hydrocarbon which is a gas at room temperature in a hydrocarbon which is a liquid at room temperature is preferred. By using a mixture of such hydrocarbons, it is possible to achieve sufficient expansion power from a low temperature region to a high temperature region within the vulcanization molding temperature range (from 150 to 190°C) of an unvulcanized tire.

Examples of such thermally expandable microcapsules that can be used include trade names "EXPANCEL 091DU-80" "EXPANCEL 092DU-120", or the like manufactured by Expancel Company in Sweden, or trade names "Matsumoto Microsphere F-85D", "Matsumoto Microsphere F-100D", or the like manufactured by Matsumoto Yushi-Seiyaku Co., Ltd.

The content of the thermally expandable microcapsules in the rubber composition is preferably from 0.1 to 10 parts by mass and more preferably from 0.5 to 5 parts by mass relative to 100 parts by mass of the rubber component.

(Porous cellulose particles)

When the rubber composition contains porous cellulose particles, in the case where the porous cellulose particles are exposed on the surface of a tire obtained by vulcanizing the rubber composition, water on an ice snow road is absorbed by the porous cellulose particles to thereby enable the water between the tire and the road surface to be removed. The presence of cellulose as a polysaccharide generates an interaction between the tire and the water on the ice snow road. Thus, the interaction between the tire and the water by a modified polyoxyalkylene glycol can be further improved.

The porous cellulose particles are cellulose particles having a porous structure of which porosity is from 75 to 95%, and when the porous cellulose particles are added to the rubber composition, performance on ice can be markedly improved. When the porosity of the porous cellulose particles is 75% or more, the effect of improving performance on ice is excellent. On the other hand, when the porosity is 95% or less, strength of the particles can be increased. The porosity is more preferably from 80 to 90%.

The porosity of the porous cellulose particles can be obtained from the following formula by measuring a volume of a certain mass of a sample (i.e., the porous cellulose particles) with a measuring cylinder and obtaining a bulk specific

gravity.

Porosity [%] = {1 - (bulk specific gravity [g/ml] of sample)/(true specific gravity [g/ml] of sample)} × 100

Here, the true specific gravity of the cellulose is 1.5

The particle diameter of the porous cellulose particles is not particularly limited, but from the viewpoint of abrasion resistance, porous cellulose particles having an average particle diameter of 1,000 μm or less are preferably used. The lower limit of the average particle size, which is not particularly limited, is preferably 5 μm or more. The average particle size is more preferably from 100 to 800 μm and further preferably from 200 to 800 μm.

Spherical particles having a ratio of long diameter/short diameter of from 1 to 2 are preferably used as the porous cellulose particles. When the particles having such a spherical structure are used, dispersibility of the particles into the rubber composition is improved, and this can contribute to improvement in performance on ice, maintenance of abrasion resistance, and the like. The ratio of long diameter/short diameter is more preferably from 1.0 to 1.5.

The average particle diameter of the porous cellulose particles and the ratio of long diameter/short diameter thereof are obtained as follows. That is, the porous cellulose particles are observed with a microscope to obtain an image. Using the image, the long diameter and short diameter (in the case where the long diameter and short diameter are the same, a length in a certain axis direction and a length in an axis direction perpendicular to the certain axis direction) are measured in 100 particles, and its average value is calculated. Thus, the average particle diameter is obtained. Furthermore, the ratio of long diameter/short diameter is obtained from the average value of values obtained by dividing the long diameter by the short diameter.

The porous cellulose particles are commercially available as "VISCOPEARL" from Rengo Co., Ltd., and further are described in JP-A-2001-323095 and JP-A-2004-115284, and those porous cellulose particles can be preferably used.

The content of the porous cellulose particles in the rubber composition is preferably from 0.3 to 20 parts by mass relative to 100 parts by mass of the rubber component. When the content is 0.3 parts by mass or more, the effect of improving performance on ice can be enhanced. On the other hand, when the content is 20 parts by mass or less, rubber hardness can be suppressed from becoming too high, and deterioration of abrasion resistance can be suppressed. The content of the porous cellulose particles is more preferably from 1 to 15 parts by weight and further preferably from 3 to 15 parts by mass.

[Hydrophilic short fiber]

The rubber composition may contain hydrophilic short fiber.

When the rubber composition includes hydrophilic short fiber, long foam appears in a tire (more specifically, tread) after vulcanizing the rubber composition; and as the tire wears, the long foam is exposed to the surface of the tire to form a void, playing a role of a drain which effectively drains water. The void may be in the form of a hole, a dent or a groove.

Furthermore, the hydrophilicity of the short fiber allows water to be easily absorbed in the void on the surface of a tire resulting from the short fiber.

As used herein, the hydrophilic short fiber refers to short fiber which has a contact angle with water of from 5 to 80 degrees.

The contact angle of the hydrophilic short fiber with water may be determined by measuring the angle that a line formed by the surface of a specimen makes with a tangent to the surface of a water droplet, when the specimen is prepared by forming hydrophilic short fiber into a smooth plate, and water is dropped on the surface of the specimen using an automatic contact angle meter, DM-301 made by Kyowa Interface Science, in the condition of 25°C and a relative humidity of 55%, and immediately after that the specimen is observed from the side.

A resin having a hydrophilic group in a molecule (sometimes referred to as hydrophilic resin) may be used as the hydrophilic short fiber. More specifically, a resin having at least one selected from an oxygen atom, a nitrogen atom and a sulfur atom is preferred. Examples thereof include a resin having at least one substituent selected from the group consisting of -OH, -COOH, -OCOR (R is alkyl group), $-NH_2$, -NCO and -SH. Of these substituents, -OH, -COOH, -OCOR, $-NH_2$ and -NCO are preferred.

Preferably, the hydrophilic resin has a small contact angle with water and has affinity to water, while the resin is insoluble in water.

The insolubility of the hydrophilic resin in water prevents the hydrophilic resin from being dissolved in water when water is attached to the surface of vulcanized rubber and the surface of a tire, allowing the water absorbing power of voids resulting from the short fiber to be maintained.

Examples of such hydrophilic resin having a small contact angle with water and insoluble in water include ethylene-vinyl alcohol copolymer, vinyl alcohol homopolymer, poly(meth)acrylic acid resin, or resin made of an ester thereof, polyamide resin, polyethylene glycol resin, carboxyvinyl copolymer, styrene-maleic acid copolymer, polyvinylpyrrolidone resin, vinyl pyrrolidone-vinyl acetate copolymer, and mercaptoethanol.

Of them, at least one resin selected from the group consisting of ethylene-vinyl alcohol copolymer, vinyl alcohol homopolymer, poly(meth)acrylic acid resin, polyamide resin, aliphatic polyamide resin, aromatic polyamide resin, polyester resin, polyolefin resin, polyvinyl alcohol resin and acrylic resin is preferred, and ethylene-vinyl alcohol copolymer is more preferred.

The shape of the short fiber is not particularly limited and may be appropriately selected according to the purpose. The short fiber has a length of preferably from 0.1 to 10 mm, more preferably from 0.5 to 5 mm in the longitudinal direction in average of 100 pieces of the short fiber. When the short fiber has such a shape, long foam which can serve as a micro-drain can be efficiently formed in the vulcanized rubber prepared by vulcanizing the rubber composition including the short fiber. Likewise, to do so, the short fiber has a mean diameter (D) of preferably from 10 to 200 μm, more preferably from 20 to 100 μm in average of 100 pieces of the short fiber.

The content of the short fiber in the rubber composition is preferably from 0.1 to 10 parts by mass and more preferably from 0.5 to 5 parts by mass relative to 100 parts by mass of the rubber component.

[Vulcanizing agent]

The rubber composition of the present invention preferably includes a vulcanizing agent.

The vulcanizing agent is not particularly limited, and sulfur is usually used. Examples thereof include powdered sulfur, precipitated sulfur, colloidal sulfur, surface treated sulfur, and insoluble sulfur.

The content of the vulcanizing agent in the rubber composition of the present invention is preferably from 0.1 to 10 parts by mass relative to 100 parts by mass of the rubber component. A content of vulcanizing agent of 0.1 part by mass or more allows vulcanization to proceed thoroughly, and a content of 10 parts by mass or less suppresses aging of vulcanized rubber.

The content of the vulcanizing agent in the rubber composition is more preferably from 0.5 to 8 parts by mass, and further preferably from 1 to 6 parts by mass relative to 100 parts by mass of the rubber component.

[Other components]

The rubber composition of the present invention may contain other components, in addition to the rubber component, filler, silane coupling agent, resin, softening agent, void introducing agent, and vulcanizing agent described above.

These other components are not particularly limited, and compounding agents usually used in the rubber industry, such as stearic acid, antioxidant, zinc oxide, foaming auxiliary, and vulcanization accelerator may be appropriately selected and included in an amount that does not impair the object of the present invention.

[Preparation of rubber composition]

The rubber composition of the present invention may be prepared by compounding and kneading the above components using a kneader such as a Banbury mixer, a roll, or an internal mixer.

At that stage, the compounding amount of the rubber component, filler, and others is the same as the content in the rubber component described above.

The respective components may be kneaded in a step, or two or more divided steps. Examples of methods of kneading components in two steps include a method in which a rubber component, filler, resin, silane coupling agent, hydrophilic short fiber, and other components to be compounded except for a vulcanizing agent and a foaming agent are kneaded in the first step, and the vulcanizing agent and the foaming agent are kneaded in the second step.

The maximum temperature of the first step of kneading is preferably from 130 to 170°C, and the maximum temperature of the final step is preferably from 90 to 120°C.

The rubber composition of the present invention has, as vulcanized rubber properties, an elastic modulus at -20°C (G') of from 3.5 to 7.8 MPa and tanδ at - 20°C of from 0.25 to 0.35.

Since the vulcanized rubber prepared by vulcanizing the rubber composition of the present invention has the properties described above, a tire to be obtained using the vulcanized rubber is excellent in performance on ice, steering stability, fuel consumption efficiency, and fracture resistance.

Likewise, the elastic modulus at -20°C (G') is preferably from 4.0 to 6.6 MPa, more preferably from 4.1 to 6.1 MPa, and further preferably from 4.3 to 6.0 MPa. Likewise, tanδ at -20°C is preferably from 0.25 to 0.35, more preferably from 0.27 to 0.35, and further preferably from 0.29 to 0.35.

The elastic modulus at -20°C (G') and tanδ at -20°C of the vulcanized rubber can be adjusted by an increase or decrease in the mass of the rubber component, in particular, an increase or decrease in the mass of the natural rubber, polybutadiene rubber, and styrene-butadiene copolymer rubber in the rubber component; the microstructure of the

polybutadiene rubber and styrene-butadiene copolymer rubber; an increase and decrease in the mass of the filler; an increase and decrease in the mass of the liquid polymer and acrylic resin, and the like.

<Vulcanized rubber, tire>

The vulcanized rubber and the tire of the present invention are prepared using the rubber composition of the present invention.

The vulcanized rubber of the present invention is prepared by vulcanizing the rubber composition of the present invention.

The tire may be prepared by molding the rubber composition of the present invention and then vulcanizing according to the type, members and the like of the tire to which the rubber composition is applied. Alternatively, it may be prepared by, for example, the step of preliminary vulcanization to obtain a semi-vulcanized rubber from the rubber composition, and molding the same and then subjecting it to main vulcanization.

Having both low elastic modulus at low temperature and high hysteresis loss at low temperature and having excellent brake performance on ice, the rubber composition is preferably applied to a tread member, in particular, a tread member of a studless tire, of various members of a tire. Furthermore, the tire may be charged with usual air or air with controlled oxygen partial pressure, or inert gas such as nitrogen, argon and helium.

The vulcanized rubber and the tire of the present invention preferably have voids.

As described above, when the rubber composition contains a void introducing agent, voids can be provided on the surface or inside of the vulcanized rubber. Specifically, when the void introducing agent is a foaming agent, the foaming agent is foamed in the process of vulcanization of the rubber composition to thereby enable voids to be provided in the vulcanized rubber. Alternatively, when the void introducing agent is hydrophilic short fiber, the hydrophilic short fiber falls off from the vulcanized rubber or the hydrophilic short fiber melts to thereby enable voids to be provided on the surface or inside of the vulcanized rubber.

The vulcanized rubber and the tire have a foaming ratio of usually from 1 to 50%, and preferably from 5 to 40%. When the foaming ratio is in the above range, foam pores on the surface of the tire are not excessively enlarged to provide a sufficient ground contact area; and since the amount of foam is properly maintained while ensuring the generation of foam pores which effectively serve as a drain, durability is less likely to be lost. In this regard, the foaming ratio of the tire is calculated by the formula (1) described above.

Examples

Hereinafter the present invention will be described in more detail with reference to Examples, but these Examples are for the purpose of illustration of the present invention and do not limit the present invention.

[Preparation of rubber composition]

The components to be compounded in the rubber composition were kneaded according to the compounding formulation shown in Tables 1 to 3 by using a Banbury mixer to prepare a sample rubber composition. Sulfur, which is a vulcanizing agent, and a vulcanization accelerator were compounded at the final stage of kneading.

Table 1

| | |
|---|---|
| Rubber component | Type and amount shown in Tables 2 to 3 |
| Filler | Type and amount shown in Tables 2 to 3 |
| Silane coupling agent | Amount shown in Tables 2 to 3 |
| Softening agent | Type and amount shown in Tables 2 to 3 |
| Resin | Type and amount shown in Tables 2 to 3 |
| Stearic acid | 2 |
| Zinc oxide | 2 |
| Vulcanization accelerator | 1 |
| Vulcanizing agent | 2 |
| Antioxidant | 2 |
| Void introducing agent (foaming agent) | Amount shown in Tables 2 to 3 |

(continued)

| | |
|---|---|
| Hydrophilic short fiber | Amount shown in Tables 2 to 3 |
| (parts by mass) | |

Details of the components described in Tables 1 to 3 are as follows.

(1) Rubber composition

Natural rubber: TSR20
BR: Ube Industries, Ltd.'s trade name "UBEPOL 150L", cis-1,4-polybutadiene rubber
Modified BR1: modified polybutadiene rubber produced by the following method
Modified BR2: modified polybutadiene rubber produced by the following method
Modified SBR: modified styrene-butadiene copolymer rubber produced by the following method

(2) Filler

Silica 1: silica synthesized by the following method, CTAB specific surface area = 180 $m^2/g$
Silica 2: Tosoh Silica Corporation's trade name "NIPSIL AQ", CTAB specific surface area=150 $m^2/g$, nitrogen adsorption specific surface area ($N_2SA$) = 200 $m^2/g$
Carbon black: Asahi Carbon's trade name "Carbon N134", $N_2SA$ = 146 $m^2/g$

(3) Silane coupling agent: Evonic's trade name "Si69"
(4) Softening agent

Oil: naphthenic process oil, Idemitsu Kosan Co., Ltd.'s trade name "Diana Process Oil NS-24", pour point = -30°C
Liquid polymer: Cray Valley's trade name "Ricon 142"

(5) Resin

C5 resin: Tonen Chemical Corporation's trade name "Escorez 1102"
Acrylic resin: Toagosei Co., Ltd.'s, trade name "ARUFON UG-4010"

(6) Stearic acid: New Japan Chemical's trade name "Stearic acid 50S"
(7) Zinc oxide: Hakusui Tech's trade name "No. 3 zinc oxide"
(8) Vulcanization accelerator: Ouchi Shinko Chemical Industry's trade name "Nocceler DM," di-2-benzothiazolyl disulfide
(9) Vulcanizing agent: Tsurumi Chemical Industry's trade name "Powder Sulfur"
(10) Antioxidant: N-isopropyl-N'-phenyl-p-phenylenediamine
(11) Void introducing agent: foaming agent, dinitrosopentamethylenetetramine (DPT)
(12) Hydrophilic short fiber: hydrophilic short fiber produced by the following method

[Method of producing modified BR1]

(1) Preparation of catalyst

7.11 g of a cyclohexane solution of butadiene (15.2% by mass), 0.59 mL of a cyclohexane solution of neodymium neodecanoate (0.56 mol/L), 10.32 mL of a toluene solution of methylaluminoxane MAO (Tosoh Akzo's trade name "PMAO") (3.23 mol/L as aluminium concentration), and 7.77 mL of a hexane solution of diisobutylaluminium hydride (by Kanto Chemical) (0.90 mol/L) were, in that order, put into a dried, nitrogen-purged, 100-mL glass bottle with a rubber stopper, and ripened at room temperature for 2 minutes, and then 1.45 mL of a hexane solution of diethylaluminium chloride (by Kanto Chemical) (0.95 mol/L) was added thereto and ripened for 15 minutes at room temperature with intermittently stirring. The neodymium concentration in the thus-obtained catalyst solution was 0.011 mol/L.

(2) Preparation of intermediate polymer

A glass bottle with a rubber stopper, having a volume of about 900 mL, was dried and purged with nitrogen, and a cyclohexane solution of dried and purified butadiene and dry cyclohexane were put thereinto to provide a condition where 400 g of a cyclohexane solution of 12.5 mass % butadiene was kept in the bottle. Next, 2.28 ml (0.025 mmol as neodymium) of the solution of catalyst prepared in (1) above was put into the bottle, and polymerization was carried out in a warm water bath at 50°C for 1.0 hour to give an intermediate polymer. The resulting polymer had a microstructure with a cis-1,4 bond content of 95.5%, a trans-1,4 bond content of 3.9%, and a vinyl bond content of 0.6%.

(3) Modification

A hexane solution of 3-glycidoxypropyltrimethoxysilane at a concentration of 1.0 mol/L was added to the polymer solution prepared in above (2) so that the amount of 3-glycidoxypropyltrimethoxysilane was 23.5 molar equivalents relative to neodymium to perform modification at 50°C for 60 minutes.

Subsequently, 1.2 mL of sorbitan trioleate (available from Kanto Kagaku) was added thereto to perform the reaction of modification for another 1 hour at 60°C. Then 2 mL of an isopropanol 5 mass % solution of an antioxidant 2,2'-methylene-bis(4-ethyl-6-t-butyl phenol) (NS-5) was added to the polymerization system to stop the reaction, and the reaction mixture was reprecipitated in isopropanol containing a small amount of NS-5, and then dried in a drum drier to give modified polybutadiene (modified BR1). The modified BR1 did not contain macrogel and had a Mooney viscosity at 100°C (ML1+4, 100°C) of 59. The microstructure after the modification was the same as that of the above intermediate polymer.

[Method of producing modified BR2]

(1) Production of non-modified polybutadiene

1.4 kg of cyclohexane, 250 g of 1,3-butadiene, and 2,2-ditetrahydrofurylpropane (0.285 mmol) was put into a 5 L, nitrogen-purged autoclave in the form of a cyclohexane solution in a nitrogen atmosphere. 2.85 mmol of n-butyl lithium (BuLi) was added thereto, and then polymerization was performed in a hot water bath at 50°C equipped with a stirrer for 4.5 hours. The reaction conversion ratio of 1,3-butadiene was almost 100%. Some of the polymer solution was drawn into a methanol solution containing 1.3 g of 2,6-di-tert-butyl-p-cresol to stop the polymerization, and then the solvent was removed by steam stripping, and the resultant was dried using a roll at 110°C to give polybutadiene before modification. The resulting polybutadiene before modification was measured for the microstructure (vinyl bond content), and as a result, the vinyl bond content was 30% by mass.

(2) Production of primary amine modified polybutadiene (modified BR2)

The polymer solution obtained in (1) was kept at a temperature of 50°C without deactivation of the polymerization catalyst, and 1,129 mg (3.364 mmol) of N,N-bis(trimethylsilyl) aminopropylmethyldiethoxysilane having a protected primary amino group was added thereto to perform the reaction of modification for 15 minutes.
Subsequently, 8.11 g of tetrakis(2-ethyl-1,3-hexanediolato) titanium, which is a condensation accelerator, was added thereto and the mixture was further stirred for 15 minutes.

Finally, 242 mg of silicon tetrachloride which is a metal halogen compound was added to the polymer solution after the reaction, and 2,6-di-tert-butyl-p-cresol was added thereto. The mixture was then subjected to steam stripping to remove the solvent and deprotect the protected primary amino group. The rubber was dried with a hot roll adjusted at 110°C to give primary amine modified polybutadiene (Modified BR2). The resulting modified polybutadiene was measured for the microstructure (vinyl bond content), and as a result, the microstructure of the obtained polymer has a vinyl bond content of 30% by mass.

The microstructure (vinyl bond content) of the intermediate polymer, the non-modified polybutadiene and the modified polybutadiene was measured by an infrared method (the Morello method).

[Method of producing modified SBR]

A cyclohexane solution of 1,3-butadiene and a cyclohexane solution of styrene were put into a dried, nitrogen-purged, pressure-tight glass container having a volume of 800 mL, in such a manner that the amount of 1,3-butadiene therein could be 67.5 g and that of styrene could be 7.5 g. 0.6 mmol of 2,2-ditetrahydrofurylpropane and 0.8 mmol of n-butyllithium were further added thereto, and then polymerization was performed at 50°C for 1.5 hours. 0.72 mmol of N,N-bis(trimethylsilyl) aminopropylmethyldiethoxysilane, which is a modifier, was added to the polymerization system in which the polymerization conversion ratio reached almost 100% to perform the reaction of modification at 50°C for 30 minutes.

Subsequently, 2 mL of an isopropanol 5 mass % solution of an antioxidant 2,6-di-t-butyl-4-cresol (BHT) was added thereto to stop the polymerization, and the resultant was dried by a usual method to give modified SBR. The resulting modified SBR was measured for the microstructure (vinyl bond content) by the Morello method, and as a result, the bound styrene content was 10% by mass and the vinyl bond content in butadiene was 40% by mass.

The bound styrene content of the polymer used as the rubber composition was determined from the integral ratio in the $^1$H-NMR spectrum.

The ratio of vinyl bond content vi (%) in the rubber component to content a (parts by mass) of the rubber component (vi/a) was calculated by the formula described above: $[(a_b \times vi_b) + (a_{sb} \times vi_{sb})]/a$. The ratio is shown in the row of "vi/a" in Tables 2 and 3.

[Method of producing silica 1]

89 L of water and 1.70 L of an aqueous solution of sodium silicate ($SiO_2$: 160 g/L, the mol ratio $SiO_2/Na_2O$ = 3.3) were placed into a jacketed stainless reaction vessel (180 L) equipped with a stirrer and then heated to 75°C. The $Na_2O$ concentration in a resulting solution was 0.015 mol/L.

The same aqueous solution of sodium silicate as described above and sulfuric acid (18 mol/L) were simultaneously added dropwise to the reaction solution at flow rates of 520 mL/minute and 23 mL/minute, respectively, with the temperature of the reaction solution kept at 75°C. The neutralization reaction was carried out, while maintaining the $Na_2O$ concentration in the reaction solution within the range of from 0.005 mol/L to 0.035 mol/L by adjusting the flow rates. The reaction solution started becoming clouded amid the reaction. In 46 minutes, the viscosity increased, and the solution turned into a gelled solution. Addition was further continued, and the reaction was stopped at 100 minutes. The silica concentration in the resulting solution was 60 g/L. Then, the same sulfuric acid as described above was added until the pH of the solution reached 3, whereby a silicic acid slurry was obtained. The silicic acid slurry thus obtained was filtered by a filter press and then washed with water, whereby a wet cake was obtained. The wet cake was then made into a slurry by an emulsification device and dried by a spray-type drier, whereby silica 1 of hydrated silicic acid according to a wet method was obtained.

The CTAB specific surface area of silica 1 was 180 $m^2/g$.
The CTAB specific surface area of silica 1 was conducted in compliance with the method described in ASTM D3765-92. In this case, a standard carbon black product IRB#3 (83.0 $m^2/g$) was not used, and a cetyltrimethylammonium bromide (hereinafter, abbreviated as CE-TRAB) standard solution was prepared separately. A hydrated silicic acid OT (sodium di-2-ethylhexylsulfosuccinate) solution was standardized using this standard solution. Assuming the cross-sectional area of a CE-TRAB molecule adsorbed to the surface of the hydrated silicic acid to be 0.35 $nm^2$, the specific surface area ($m^2/g$) was calculated from the amount of adsorption of CE-TRAB.

The ink bottle-shaped pore index (IB) of silica 1 was 20.00.

The ink bottle-shaped pore index (IB) of silica 1 was determined as follows.

First, the pressure was increased from 1 to 32,000 PSI based on mercury porosimetry using a mercury porosimeter, POREMASTER-33 (manufactured by Quantachrome Corporation). On the outer surface of the hydrated silicic acid, the mercury intrusion volume in pores having an opening diameter of from $1.2 \times 10^5$ nm to 6 nm was measured, and a diameter (M1) located at the peak of the mercury intrusion volume was determined as illustrated in Figure 2. Then, the pressure was decreased from 32,000 PSI to 1 PSI to extrude mercury from the pours. A diameter (M2) located at the peak of the mercury extrusion volume was determined from the extrusion curve at this time. From these values of M1 and M2, IB was calculated by the formula (Z) [IB = M2 - M1].

[Method of producing hydrophilic short fiber]

In accordance with Preparation Example 3 disclosed in JP-A-2012-219245, by using two twin-screw extruders, 40 parts by mass of polyethylene [Novatec HJ360 (MFR 5.5 and melting point 132°C) manufactured by Japan Polyethylene Corporation] and 40 parts by mass of an ethylene-vinyl alcohol copolymer [EVAL F104B (MFR 4.4 and melting point 183°C) manufactured by KURARAY CO., LTD.] were placed into the hopper and separately and simultaneously extruded from a die exit, and the fiber obtained according to a common method was cut to a length of 2 mm. Thereby, a hydrophilic short fiber was produced, the fiber including a coating layer made of polyethylene formed thereon.

<Evaluation of vulcanized rubber properties>

[Examples 1 to 12, Comparative Examples 1 to 9]

Vulcanized rubber properties, that is, the storage elastic modulus (G') and the loss tangent (tanδ) were measured in accordance with the following approach. The foaming ratio of the vulcanized rubber was also determined by the formula

(1) described above. The results are shown in Tables 2 to 3.

By use of vulcanized rubber cut out from a test tire produced for the performance on ice evaluation, the storage elastic modulus at -20°C (G') and the loss tangent at -20°C (tanδ) were measured using a viscoelasticity measurement apparatus ARES (manufactured by TA Instruments, Inc.) under conditions of a temperature of a strain of 1% and a frequency of 10 Hz.

A smaller 0.1% G' exhibits a smaller elastic modulus, exhibiting better performance. A larger 0.1% tanδ exhibits higher hysteresis loss, and it can be said that the performance is good.

<Evaluation of tire>

1. Evaluation of performance on ice

[Examples 1 to 5, Comparative Example 2]

The rubber composition prepared was used for tread to produce a test tire (tire size 195/65R15) by a usual method.

Four each of the test tires of Examples and Comparative Examples were mounted on a Japanese car of 1,600 cc displacement (anti-lock braking system: equipped with ABS), and the braking distance of the brake was measured at an ice temperature of -1°C. With the braking distance of the test tire of Comparative Example 1 assumed as 100, the performance on ice was expressed as an index by the following formula.

Index of performance on ice = (braking distance of test tire of Comparative Example 1/braking distance of test tire of other than Comparative Example 1) × 100

A larger index of performance on ice exhibits more excellent performance on ice, and the tolerance is 102 or more.

[Examples 6 to 12, Comparative Examples 1, 3 to 9]

The rubber composition prepared are used for tread to produce a test tire (tire size 195/65R15) by a usual method.

Four each of the test tires of Examples and Comparative Examples are mounted on a Japanese car of 1,600 cc displacement (anti-lock braking system: equipped with ABS), and the braking distance of the brake is measured at an ice temperature of -1°C. With the braking distance of the test tire of Comparative Example 1 assumed as 100, the performance on ice is expressed as an index by the following formula.

Index of performance on ice = (braking distance of test tire of Comparative Example 1/braking distance of test tire of other than Comparative Example 1) × 100

A larger index of performance on ice exhibits more excellent performance on ice, and the tolerance is 102 or more.

2. Evaluation of steering stability

[Examples 1 to 12, Comparative Examples 1 to 9]

The rubber composition prepared was used for tread to produce a test tire (tire size 195/65R15) by a usual method. The storage elastic modulus (E') of the vulcanized rubber cut out from the test tire produced was measured using a spectrometer manufactured by Ueshima Seisakusho. The measurement conditions included a temperature of 30°C, an initial strain of 2%, a dynamic strain of 1%, and a frequency of 52 Hz. With E' of Comparative Example 1 assumed as 100, the modulus was expressed as an index.

A larger index of steering stability exhibits more excellent steering stability, and the tolerance is 100 or more.

In Examples 6 to 12 and Comparative Examples 1 and 3 to 9, the test results are predicted values.

3. Evaluation of fuel consumption efficiency

[Examples 1 to 12, Comparative Examples 1 to 9]

The loss tangent (tanδ) of the vulcanized rubber cut out from the test tire produced in the steering stability evaluation was measured using a spectrometer manufactured by Ueshima Seisakusho. The measurement conditions included a temperature of 50°C, an initial strain of 2%, a dynamic strain of 1%, and a frequency of 52 Hz. With tanδ of Comparative Example 1 assumed as 100, the tangent loss was expressed an index.

A larger index of fuel consumption efficiency exhibits more excellent fuel consumption efficiency, and the tolerance is 100 or more.

In Examples 6 to 12 and Comparative Examples 1 and 3 to 9, the test results are predicted values.

4. Evaluation of fracture resistance

[Examples 1 to 12, Comparative Examples 1 to 9]

A No. 3 dumbbell specimen was produced from vulcanized rubber cut out from the test tire produced in the steering stability evaluation in compliance with JIS K6251:2004. The tensile stress at break (TSb) (MPa) at 100°C of a sample obtained by thermally aging the specimen at 100°C for 24 hours was measured. With the tensile stress at break of the specimen of Comparative Example 1 assumed as 100, the tensile stress at break was expressed as an index by the following formula.

Index of fracture resistance = (tensile stress at break of specimen of other than Comparative Example 1/tensile stress at break of specimen of Comparative Example 1) × 100

A larger fracture property index indicates that the tire is unlikely to be fractured and the fracture property is excellent, and the tolerance is 95 or more.

In Examples 6 to 12 and Comparative Examples 1 and 3 to 9, the test results are predicted values.

Table 2

| | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| Rubber component | Natural rubber | Parts | 40 | 40 | 40 | 40 | 40 | 40 | 40 | 40 | 40 | 50 | 40 |
| | Modified BR1 | Parts | 40 | 40 | 40 | 40 | 40 | 40 | 40 | 40 | 40 | 30 | 40 |
| | Modified SBR | Parts | 20 | 20 | 20 | 20 | 20 | 20 | 20 | 20 | 20 | 20 | 20 |
| Filler | Silica 1 | Parts | 35 | 35 | 35 | 35 | 35 | 35 | 35 | 35 | 35 | 35 | - |
| | Silica 2 | Parts | - | - | - | - | - | - | - | - | - | - | 35 |
| | Carbon black | Parts | 35 | 35 | 35 | 35 | 35 | 35 | 35 | 35 | 35 | 35 | 35 |
| Silane coup | ling agent | Parts | 3.5 | 3.5 | 3.5 | 3.5 | 3.5 | 3.5 | 3.5 | 3.5 | 3.5 | 3.5 | 2.8 |
| Softening agent | Oil | Parts | 20 | - | 20 | 20 | - | - | - | - | - | - | 20 |
| | Liquid polymer | Parts | - | 20 | - | - | 20 | 20 | 20 | 20 | 20 | 10 | - |
| Resin | C5 RESIN | Parts | 15 | 15 | 15 | 15 | 15 | 15 | 15 | 15 | 15 | 10 | 15 |
| | Acrylic resin | Parts | - | - | 10 | 10 | 10 | - | - | 10 | 10 | - | - |
| Void introducing agent | Foaming agent | Parts | 5 | 5 | 5 | 5 | 5 | 4 | 6 | 6 | 6.5 | 4 | 5 |
| Hydrophilic short fiber | | Parts | 2 | 2 | 2 | - | - | - | - | - | - | - | 2 |
| [vi/a] | | - | 8.0 | 8.0 | 8.0 | 8.0 | 8.0 | 8.0 | 8.0 | 8.0 | 8.0 | 8.0 | 8.0 |
| Vulcanized rubber properties | Foaming ratio | % | 20 | 20 | 20 | 20 | 20 | 10 | 30 | 30 | 35 | 20 | 20 |
| | 0.1%G' | MPa | 5.52 | 4.10 | 6.03 | 6.04 | 6.56 | 5.09 | 5.57 | 4.69 | 4.34 | 4.31 | 5.43 |
| | 0.1%tanδ | - | 0.28 | 0.32 | 0.27 | 0.27 | 0.31 | 0.32 | 0.30 | 0.28 | 0.28 | 0.33 | 0.29 |

(continued)

| | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| Evaluation | Performance on ice | Index | 102 | 103 | 106 | 103 | 106 | 108 | 111 | 107 | 109 | 102 | 103 |
| | Steering stability | Index | 105 | 104 | 104 | 104 | 104 | 100 | 100 | 101 | 100 | 105 | 103 |
| | Fuel consumption efficiency | Index | 103 | 101 | 104 | 104 | 101 | 100 | 100 | 102 | 102 | 102 | 105 |
| | Fracture resistance | Index | 101 | 98 | 96 | 97 | 96 | 99 | 95 | 100 | 99 | 108 | 101 |

Table 3

| | | | Example 12 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|
| Rubber component | Natural rubber | Parts | 50 | 50 | 50 | 60 | 35 | 40 | 40 | 40 | 50 | 50 |
| | Modified BR1 | Parts | - | 50 | 50 | - | 50 | 40 | 40 | 40 | 35 | 35 |
| | Modified BR2 | Parts | - | - | - | 20 | - | - | - | - | - | - |
| | BR | Parts | 30 | - | - | - | - | - | - | - | - | - |
| | Modified SBR | Parts | 20 | - | - | 20 | 15 | 20 | 20 | 20 | 15 | 15 |
| Filler | Silica 1 | Parts | - | 35 | 35 | - | - | 35 | 35 | 35 | 30 | 30 |
| | Silica 2 | Parts | 35 | - | - | 35 | 35 | - | - | - | - | - |
| | Carbon black | Parts | 35 | 35 | 35 | 35 | 35 | 35 | 35 | 35 | 30 | 30 |
| Silane coupling agent | | Parts | 2.8 | 2.8 | 2.8 | 2.8 | 2.8 | 3.5 | 3.5 | 3.5 | 3.0 | 3.0 |
| Softening agent | Oil | Parts | 10 | 30 | 20 | - | - | 10 | 25 | 10 | 10 | 10 |
| | Liquid polymer | Parts | 10 | - | - | - | - | 20 | - | - | - | - |
| Resin | C5 RESIN | Parts | 10 | 15 | 15 | 15 | 15 | 15 | 10 | 15 | 15 | 0 |
| Void introducing agent | Foaming agent | Parts | 4 | 4 | 4 | 4 | 4 | 4 | 4 | 4 | 4 | 4 |
| Hydrophilic short fiber | | Parts | 2 | - | - | - | - | - | - | - | - | - |
| [vi/a] | | - | 8.0 | 0.0 | 0.0 | 14.0 | 6.0 | 8.0 | 8.0 | 8.0 | 6.0 | 6.0 |
| Vulcanized rubber properties | Foaming ratio | % | 20 | 20 | 20 | 20 | 20 | 20 | 20 | 20 | 20 | 20 |
| | 0.1%G' | MPa | 4.80 | 3.48 | 5.13 | 7.93 | 5.10 | 2.78 | 5.24 | 8.11 | 3.80 | 3.90 |
| | 0.1%tanδ | - | 0.35 | 0.31 | 0.31 | 0.22 | 0.28 | 0.32 | 0.24 | 0.29 | 0.31 | 0.17 |
| Evaluation | Performance on ice | Index | 107 | 100 | 98 | 99 | 101 | 104 | 98 | 94 | 99 | 96 |
| | Steering stability | Index | 105 | 100 | 102 | 104 | 105 | 95 | 102 | 107 | 99 | 99 |
| | Fuel consumption efficiency | Index | 101 | 100 | 102 | 104 | 105 | 95 | 102 | 107 | 101 | 103 |
| | Fracture resistance | Index | 104 | 100 | 105 | 121 | 89 | 94 | 101 | 105 | 99 | 109 |

As can be seen from Tables 2 to 3, all the test tires of Examples have an index of performance on ice of 102 or more, an index of steering stability and an index of fuel consumption efficiency of 100 or more, and an index of fracture resistance of 95 or more, and the tires of Examples are excellent in performance on ice, steering stability, fuel consumption efficiency, and fracture resistance.

In contrast, for the test tires of Comparative Examples, it can be seen that any one or more of the index of performance on ice, index of steering stability, index of fuel consumption efficiency, and index of fracture resistance fall below the reference value and that performance on ice, steering stability, fuel consumption efficiency, and fracture resistance cannot be simultaneously improved.

Industrial Applicability

The present invention can provide a tire excellent in performance on ice, steering stability, fuel consumption efficiency, and fracture resistance. The tire has effective grip force even when traveling on an ice and snow road, allowing a vehicle to have excellent braking performance, and therefore is suitable as a studless tire.

## Claims

**1.** A rubber composition comprising:

a rubber component comprising a natural rubber, a polybutadiene rubber, and a styrene-butadiene copolymer rubber,
more than 60 parts by mass of a filler relative to 100 parts by mass of the rubber component, and
at least one selected from the group consisting of a liquid polymer and an acrylic resin, wherein,
the mass n of the natural rubber in the rubber component is 40% by mass or more,
the mass n, a mass b of the polybutadiene rubber, and a mass s of the styrene-butadiene copolymer rubber satisfy the relation: $s \leq b \leq n$, provided that when $n = b$, $s < b$,
the ratio of the mass b to the mass s (b/s) is from 1.0 to 2.0,
the ratio of the vinyl bond content vi (%) of the rubber component, as measured by an infrared method, to the content a of the rubber component [vi/a] is 8 or more, as calculated according to the method as disclosed in the present description, and
as vulcanized rubber properties, the elastic modulus at -20°C is from 3.5 to 7.8 MPa, and tanδ at -20°C is from 0.250 to 0.350, as measured according to the methods as described in the present description.

**2.** The rubber composition according to claim 1, wherein the filler comprises silica.

**3.** The rubber composition according to claim 2, wherein the silica has a cetyltrimethylammonium bromide specific surface area of 160 $m^2/g$ or more, as measured in accordance with ASTM D3765-92.

**4.** The rubber composition according to claim 2 or 3, wherein the polybutadiene rubber and the styrene-butadiene copolymer rubber are each silane-modified.

**5.** The rubber composition according to any one of claims 1 to 4, wherein the polybutadiene rubber is a high cis-polybutadiene rubber having a cis-1,4-bond content in a 1,3-butadiene unit of 90% or more.

**6.** The rubber composition according to any one of claims 1 to 5, further comprising a void introducing agent.

**7.** The rubber composition according to claim 6, wherein the void introducing agent is at least one selected from the group consisting of a foaming agent, a metal sulfate, thermally expandable microcapsules, and porous cellulose particles.

**8.** A vulcanized rubber obtained by vulcanizing the rubber composition according to any one of claims 1 to 7.

**9.** The vulcanized rubber according to claim 8, having voids.

**10.** A tire obtained by using the vulcanized rubber according claim 8 or 9.

## Patentansprüche

1. Kautschukzusammensetzung umfassend:

   eine Kautschukkomponente umfassend einen Naturkautschuk, einen Polybutadien-Kautschuk und einen Styrol-Butadien-Copolymer-Kautschuk.
   mehr als 60 Masseteile eines Füllstoffs im Verhältnis zu 100 Masseteilen der Kautschukkomponente und mindestens eines ausgewählt aus der Gruppe bestehend aus einem flüssigen Polymer und einem Acrylharz, wobei
   die Masse n des Naturkautschuks in der Kautschukkomponente 40 Masse-% oder mehr beträgt,
   die Masse n, eine Masse b des Polybutadien-Kautschuks und eine Masse s des Styrol-Butadien-Copolymer-Kautschuks die Beziehung $s \leq b \leq n$ erfüllen, vorausgesetzt, dass, wenn $n = b$, $s < b$,
   das Verhältnis der Masse b zu der Masse s (b/s) 1,0 bis 2,0 beträgt,
   das Verhältnis des Vinylbindungsgehalts vi (%) der Kautschukkomponente, wie durch ein Infrarotverfahren gemessen, zu dem Gehalt a der Kautschukkomponente [vi/a] 8 oder mehr beträgt, wie dem Verfahren, wie in der vorliegenden Beschreibung offenbart, entsprechend gemessen, und
   als Eigenschaften von vulkanisiertem Kautschuk, der Elastizitätsmodul bei -20 °C 3,5 bis 7,8 MPa beträgt, und $\tan\delta$ bei -20 °C 0,250 bis 0,350 beträgt, wie den Verfahren, wie in der vorliegenden Beschreibung beschrieben, entsprechend gemessen.

2. Kautschukzusammensetzung nach Anspruch 1, wobei der Füllstoff Siliciumdioxid umfasst.

3. Kautschukzusammensetzung nach Anspruch 2, wobei das Siliciumdioxid einen für Cetyltrimethylammoniumbromid spezifischen Oberflächenbereich von 160 $m^2/g$ oder mehr, wie ASTM D3765-92 entsprechend gemessen, aufweist.

4. Kautschukzusammensetzung nach Anspruch 2 oder 3, wobei der Polybutadien-Kautschuk und der Styrol-Butadien-Copolymer-Kautschuk jeder silanmodifiziert ist.

5. Kautschukzusammensetzung nach einem der Ansprüche 1 bis 4, wobei der Polybutadien-Kautschuk ein Hoch-cis-Polybutadien-Kautschuk ist, der einen cis-1,4-Bindungsgehalt in einer 1,3-Butadieneinheit von 90 % oder mehr aufweist.

6. Kautschukzusammensetzung nach einem der Ansprüche 1 bis 5, ferner ein hohlraumeinführendes Mittel umfassend.

7. Kautschukzusammensetzung nach Anspruch 6, wobei das hohlraumeinführende Mittel mindestens eines ist ausgewählt aus der Gruppe bestehend aus einem Schäummittel, einem Metallsulfat, thermisch expandierbaren Mikrokapseln und porösen Cellulosepartikeln.

8. Vulkanisierter Kautschuk, der durch Vulkanisieren der Kautschukzusammensetzung nach einem der Ansprüche 1 bis 7 erhalten wird.

9. Vulkanisierter Kautschuk nach Anspruch 8, der Hohlräume aufweist.

10. Reifen, der unter Anwendung des vulkanisierten Kautschuks nach Anspruch 8 oder 9 erhalten wird.

## Revendications

1. **Composition** de caoutchouc comprenant :

   un composant de caoutchouc comprenant un caoutchouc d'origine naturelle, un caoutchouc de polybutadiène, et un caoutchouc copolymère de styrène-butadiène,
   plus de 60 parties en masse d'une charge par rapport à 100 parties en masse du composant de caoutchouc, et au moins l'un sélectionné dans le groupe constitué d'un polymère liquide et d'une résine acrylique, dans laquelle,
   la masse n du caoutchouc d'origine naturelle dans le composant de caoutchouc est de 40 % en masse ou plus,
   la masse n, une masse b du caoutchouc de polybutadiène, et une masse s du caoutchouc copolymère de styrène-butadiène satisfont la relation : $s \leq b \leq n$, à condition que lorsque $n = b$, $s < b$,
   le ratio de la masse b à la masse s (b/s) est de 1,0 à 2,0,

le ratio de la teneur en liaisons vinyliques vi (%) du composant de caoutchouc, tel que mesuré par un procédé infrarouge, à la teneur a du composant de caoutchouc [vi/a] est de 8 ou plus, tel que calculé selon le procédé tel que décrit dans la présente description, et comme propriétés du caoutchouc vulcanisé, le module élastique à -20 °C est de 3,5 à 7,8 MPa, et tanδ à -20 °C est de 0,250 à 0,350, tels que mesurés selon les procédés tels que décrits dans la présente description.

**2.** Composition de caoutchouc selon la revendication 1, dans laquelle la charge comprend de la silice.

**3.** Composition de caoutchouc selon la revendication 2, dans laquelle la silice présente une surface spécifique au bromure de cétyltriméthylammonium de 160 $m^2/g$ ou plus, telle que mesurée selon la norme ASTM D3765-92.

**4.** Composition de caoutchouc selon la revendication 2 ou la revendication 3, dans laquelle le caoutchouc de polybutadiène et le caoutchouc copolymère de styrène-butadiène sont chacun modifiés au silane.

**5.** Composition de caoutchouc selon l'une quelconque des revendications 1 à 4, dans laquelle le caoutchouc de polybutadiène est un caoutchouc à teneur élevée en *cis*-polybutadiène ayant une teneur en liaisons *cis-1,4* dans un motif 1,3-butadiène de 90 % ou plus.

**6.** Composition de caoutchouc selon l'une quelconque des revendications 1 à 5, comprenant en outre un agent d'introduction de vides.

**7.** Composition de caoutchouc selon la revendication 6, dans laquelle l'agent d'introduction de vides est au moins l'un sélectionné dans le groupe constitué d'un agent d'expansion, d'un sulfate métallique, de microcapsules thermiquement expansibles, et de particules poreuses de cellulose.

**8.** Caoutchouc vulcanisé obtenu par vulcanisation de la composition de caoutchouc selon l'une quelconque des revendications 1 à 7.

**9.** Caoutchouc vulcanisé selon la revendication 8, ayant des vides.

**10.** Pneumatique obtenu en utilisant le caoutchouc vulcanisé selon la revendication 8 ou 9.

FIG. 1]

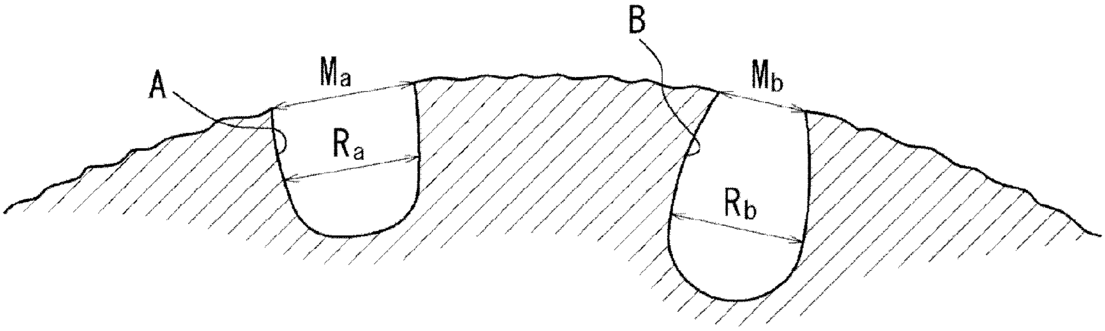
A
B
Ma
Mb
Ra
Rb

[FIG. 2]

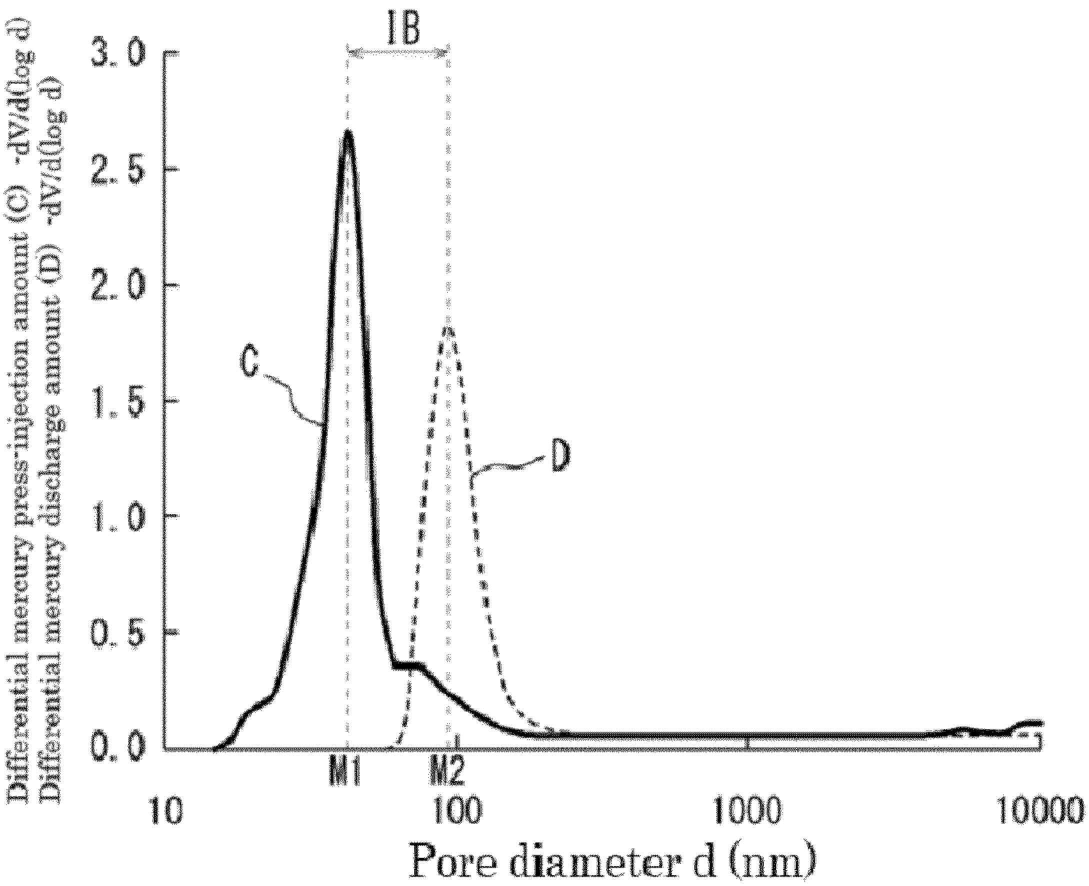
Differential mercury press-injection amount (C) -dV/d(log d)
Differential mercury discharge amount (D) -dV/d(log d)
IB
3.0
2.5
2.0
1.5
1.0
0.5
0.0
C
D
M1
M2
10
100
1000
10000
Pore diameter d (nm)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017126629 A
- JP 2001 A
- JP 323095 A
- JP 2004115284 A
- JP 2012219245 A